(19) Europäisches Patentamt
European Patent Office
Office européen des brevets

(11) **EP 4 462 901 A1**

(12) **EUROPEAN PATENT APPLICATION**
published in accordance with Art. 153(4) EPC

(43) Date of publication:
**13.11.2024 Bulletin 2024/46**

(21) Application number: **22918908.9**

(22) Date of filing: **28.12.2022**

(51) International Patent Classification (IPC):
*H04W 68/00* (2009.01)     *H04W 52/02* (2009.01)
*H04W 72/121* (2023.01)     *H04W 72/232* (2023.01)
*H04W 76/30* (2018.01)

(52) Cooperative Patent Classification (CPC):
**H04W 52/02; H04W 68/00; H04W 72/121;**
**H04W 72/232; H04W 76/30;** Y02D 30/70

(86) International application number:
**PCT/JP2022/048635**

(87) International publication number:
**WO 2023/132325 (13.07.2023 Gazette 2023/28)**

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Designated Extension States:
**BA**
Designated Validation States:
**KH MA MD TN**

(30) Priority: **07.01.2022 JP 2022001580**

(71) Applicants:
• **DENSO CORPORATION**
**Kariya-city, Aichi 448-8661 (JP)**

• **TOYOTA JIDOSHA KABUSHIKI KAISHA**
**Toyota-shi**
**Aichi 471-8571 (JP)**

(72) Inventors:
• **NAGANO, Tatsuki**
**Kariya-city, Aichi 448-8661 (JP)**
• **TAKAHASHI, Hideaki**
**Kariya-city, Aichi 448-8661 (JP)**

(74) Representative: **TBK**
**Bavariaring 4-6**
**80336 München (DE)**

(54) **TERMINAL, BASE STATION, AND COMMUNICATION METHOD**

(57)     A terminal includes a reception unit configured to receive system information including second information related to a cell to which first information related to a subgroup in one or more paging occasions is transmitted; and a control unit configured to control monitoring of a PDCCH for first downlink control information including the first information based on the second information in a case of an idle state or an inactive state, in which the control unit is configured to monitor the PDCCH for the first downlink control information including the first information in a cell in which an RRC release message is received when the second information is configured for a last cell indicating the cell in which the RRC release message is received, and monitor the PDCCH for the first downlink control information including the first information in a serving cell when the second information is not configured.

Fig. 17

## Description

### Cross-Reference to Related Application

The present application is based on Japanese Patent Application No. 2022-001580 filed on January 7, 2022 and claims the benefit of priority thereof.

The entire contents of the patent application are incorporated in the present specification by reference.

### Technical Field

The present disclosure relates to a terminal, a base station, and a communication method.

### Background Art

In Third Generation Partnership Project (3GPP) as an international standards organization, New Radio (NR) Release 15 as the 5th generation (5G) Radio Access Technology (RAT) is specified as a successor to Long Term Evolution (LTE) as the 3.9th generation RAT and LTE-Advanced as the 4th generation RAT (for example, Non-Patent Literature 1). LTE and/or LTE-Advanced are also called Evolved Universal Terrestrial Radio Access (E-UTRA).

Citation List

Non-Patent Literature

NPL 1: 3GPP TS 38.300 V15.2.0 (2018-06)

### Summary of Invention

Technical Problem

In NR, a terminal can monitor Downlink Control Information (DCI) (hereinafter, referred to as "paging DCI" and also referred to as "second downlink control information" or the like) including information related to scheduling of a downlink shared channel (for example, a Physical Downlink Shared Channel (PDSCH)) for transmitting a paging message and/or information related to a short message in a given period called a Paging Occasion (PO), and can receive the paging message and/or the short message based on detected paging DCI.

At present, in 3GPP, it is considered to inform a terminal of information (hereinafter, referred to as "Paging Early Indication (PEI) information" or "first information") related to paging in one or more POs, and to control a terminal operation in the POs based on the PEI information.

An object of the present disclosure is to provide a terminal, a base station, and a communication method in which transmission and reception of the PEI information can be appropriately controlled.

According to one aspect of the present disclosure, there is provided a terminal including a reception unit configured to receive system information including second information related to a cell to which first information related to a subgroup in one or more paging occasions is transmitted; and a control unit configured to control monitoring of a PDCCH for first downlink control information including the first information based on the second information in a case of an idle state or an inactive state, in which the control unit is configured to monitor the PDCCH for the first downlink control information including the first information in a cell in which an RRC release message is received when the second information is configured for a last cell indicating the cell in which the RRC release message is received, and monitor the PDCCH for the first downlink control information including the first information in a serving cell when the second information is not configured.

According to the present disclosure, the transmission and reception of the PEI information can be appropriately controlled.

### Brief Description of Drawings

Fig. 1 is a diagram illustrating an example of the summary of a wireless communication system according to the present embodiment.

Fig. 2 is a diagram illustrating an example of a PO according to the present embodiment.

Fig. 3 is a diagram illustrating an example of a relationship between a PEI-O and POs according to the present embodiment.

Fig. 4 is a sequence diagram illustrating an example of a processing procedure for a terminal 10 in an idle state.

Fig. 5 is a sequence diagram illustrating an example of a processing procedure for the terminal in an inactive state.

Fig. 6 is a diagram illustrating a specification change example (1) of the 3GPP specification (TS38.304).

Fig. 7 is a diagram illustrating a specification change example (1) of the 3GPP specification (TS38.331).

Fig. 8 is a diagram illustrating a specification change example (2) of the 3GPP specification (TS38.304).

Fig. 9 is a diagram illustrating a specification change example (2) of the 3GPP specification (TS38.331).

Fig. 10 is a diagram illustrating a specification change example of the 3GPP specification (TS38.413).

Fig. 11 is a diagram illustrating a specification change example of the 3GPP specification (TS38.413).

Fig. 12 is a diagram illustrating a specification change example of the 3GPP specification (TS38.413).

Fig. 13 is a diagram illustrating a specification change example of the 3GPP specification (TS38.413).

Fig. 14 is a diagram illustrating a specification change example of the 3GPP specification (TS38.423).

Fig. 15 is a diagram illustrating a specification change example of the 3GPP specification (TS38.423).

Fig. 16 is a diagram illustrating an example of a hardware configuration of each apparatus in a wireless communication system according to the present embodiment.

Fig. 17 is a diagram illustrating an example of a functional configuration of a terminal according to the present embodiment.

Fig. 18 is a diagram illustrating an example of a functional block configuration of a base station according to the present embodiment.

Fig. 19 is a diagram illustrating an example of a functional configuration of a core network according to the present embodiment.

## Description of Embodiments

Hereinafter, the present embodiment will be described with reference to the accompanying drawings. For easy understanding of the description, the same constituents in each drawing will be assigned the same reference signs as much as possible, and duplicate descriptions will be omitted.

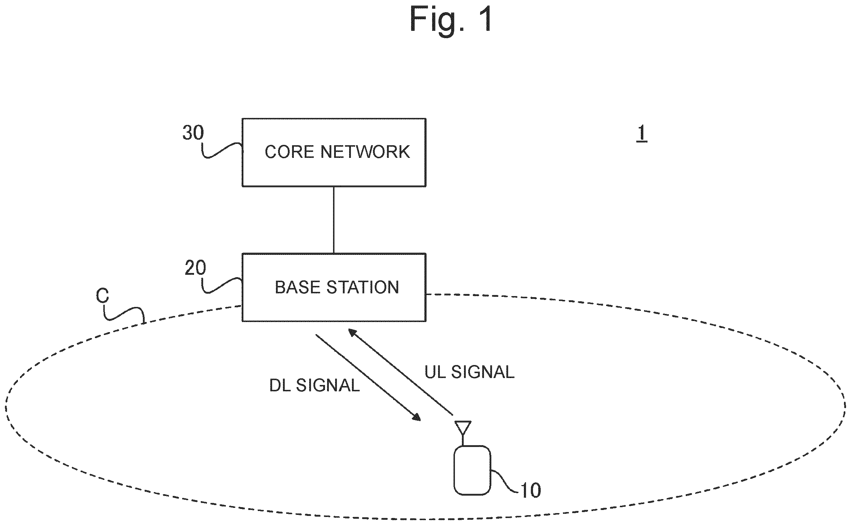

Fig. 1 is a diagram illustrating an example of a summary of a wireless communication system according to the present embodiment. As illustrated in Fig. 1, a wireless communication system 1 may include a terminal 10, a base station 20, and a core network 30. The number of terminals 10 and the number of base stations 20 illustrated in Fig. 1 are merely an example and are not limited to the illustrated numbers.

The wireless communication system 1 is a system that performs communication by complying with a Radio Access Technology (RAT) defined by the 3GPP. The radio access technology with which the wireless communication system 1 complies is assumed to be, for example, but is not limited to, a fifth generation RAT such as NR. For example, one or more RATs such as a fourth generation RAT such as LTE and LTE-Advanced and a non-3GPP RAT such as an RAT of a sixth generation or later and Wi-Fi (registered trademark) can be used. The wireless communication system 1 may be in the form of performing communication by complying with a radio access technology defined by a standard-setting body (for example, Institute of Electrical and Electronics Engineers (IEEE) and Internet Engineering Task Force (IETF)) different from the 3GPP.

The terminal 10 is an apparatus corresponding to a terminal (for example, User Equipment (UE)) defined in the 3GPP specification. The terminal 10 is, for example, a given terminal or an apparatus such as a smartphone, a personal computer, a vehicle, a vehicle-mounted terminal, a vehicle-mounted apparatus, a stationary apparatus, a Telematics Control Unit (TCU), and an IoT device such as a sensor. The terminal 10 may be called User Equipment (UE), a Mobile Station (MS), a user terminal, a radio apparatus, a subscriber terminal, an access terminal, or the like. In addition, the terminal 10 may be a so-called reduced capability (RedCap) terminal and may be, for example, an industrial wireless sensor, a video surveillance camera, or a wearable device. The terminal 10 may be of a mobile type or a fixed type. For example, the terminal 10 is configured to be capable of performing communication using one or more RATs such as NR, LTE, LTE-Advanced, and Wi-Fi (registered trademark). The terminal 10 is not limited to a terminal defined in the 3GPP specification and may be a terminal complying with a standard defined by other standard-setting bodies. In addition, the terminal 10 may not be a terminal complying with a standard.

The base station 20 is an apparatus corresponding to a base station (for example, a gNodeB (gNB) or an eNB) defined in the 3GPP specification. The base station 20 forms one or more cells C and communicates with the terminal 10 using the cell. The cell C may be replaced with a serving cell, a carrier, a component carrier (CC), or the like. In addition, the cell C may have a given bandwidth. For example, the base station 20 may communicate with the terminal 10 using one or more cell groups. Each cell group may include one or more cells C. Unifying a plurality of cells C in a cell group is called carrier aggregation. The plurality of cells C may include a Primary Cell (PCell) or a Primary Secondary Cell Group (SCG) cell (PSCell), and one or more Secondary Cells (SCGs). In addition, communicating with the terminal 10 using two cell groups is called dual connectivity. The terminal 10 is not limited to a base station defined in the 3GPP specification and may be a terminal complying with a standard defined by other standard-setting bodies. In addition, the terminal 10 may not be a base station complying with a standard.

The base station 20 may be called a gNodeB (gNB), an en-gNB, a next generation-radio access network (NG-RAN) node, a low-power node, a central unit (CU), a distributed unit (DU), a gNB-DU, a remote radio head (RRH), an integrated access and backhaul/backhauling (IAB) node, an access point, or the like. The base station 20 is not limited to one node and may be configured with a plurality of nodes (for example, a combination of a lower node such as a DU and a higher node such as a CU).

The core network 30 is, for example, but is not limited to, a fifth Generation Core Network (5GC)) or a fourth generation core network (Evolved Packet Core (EPC)). An apparatus on the core network 30 (hereinafter, referred to as a "core network apparatus") may perform mobility management such as paging and location registration of the terminal 10. The core network apparatus may be connected to the base station 20 or to the terminal 10 through a given interface (for example, an S1 or NG interface).

The core network apparatus may include, for example, at least one of an Access And Mobility Management Function (AMF) of managing information on a C-plane (for example, information related to access, mobility management, and the like) or a User Plane Function (UPF) of performing a transmission control of information on a U-plane (for example, user data).

In the wireless communication system 1, the terminal 10 receives a downlink (DL) signal from the base station 20 and/or transmits an uplink (UL) signal to the base station 20. One or more cells C may be configured for the terminal 10, and at least one of the configured cells may be activated. The maximum bandwidth of each cell is, for example, 20 MHz or 400 MHz.

In addition, the terminal 10 performs a cell search based on a synchronization signal (for example, a primary synchronization signal (PSS) and/or a secondary synchronization signal (SSS)) from the base station 20. The cell search is a procedure for the terminal 10 to acquire time and frequency synchronization with the cell and detect an identifier (for example, a physical layer cell ID) of the cell.

The terminal 10 determines a search space set and/or a Control Resource Set (CORESET) based on parameters (hereinafter, referred to as "RRC parameters") included in a Radio Resource Control (RRC) message. The CORESET may be configured with a frequency domain resource (for example, a given number of resource blocks) and a time domain resource (for example, a given number of symbols). The RRC parameters may be called RRC information elements (IEs) or the like.

The terminal 10 monitors downlink control information (DCI) transmitted through a downlink control channel (for example, a physical downlink control channel (PDCCH)) in the search space set associated with the CORESET. The RRC message may include, for example, an RRC setup message, an RRC reconfiguration message, an RRC resume message, an RRC reestablishment message, and system information. Hereinafter, the downlink control channel is referred to as a PDCCH, but may have other names.

Monitoring of the DCI means blind decoding of PDCCH candidates in the search space set with an assumed DCI format by the terminal 10. The number of bits (referred to as a size, a bit width, or the like) of the DCI format is set in advance or derived in accordance with the number of bits of fields included in the DCI format. The terminal 10 detects the DCI for the terminal 10 based on the number of bits of the DCI format and on a specific Radio Network Temporary Identifier (RNTI) used for scrambling a Cyclic Redundancy Check (CRC) bit (referred to as a CRC parity bit) of the DCI format (hereinafter, referred to as "CRC scrambling"). Monitoring of the DCI is called PDCCH monitoring, a PDCCH monitor, or the like. In addition, a given period for monitoring the DCI or the PDCCH is called a PDCCH monitoring occasion.

The terminal 10 receives (or detects) the DCI which is CRC scrambled using the specific RNTI (for example, P-RNTI, Cell (C)-RNTI, or the like) by monitoring the PDCCH using the search space set in the PDCCH monitoring occasion. The terminal 10 controls reception of a downlink shared channel (for example, a physical downlink shared channel (PDSCH)) scheduled using the DCI and/or transmission of an uplink shared channel (for example, a physical uplink shared channel (PUSCH)) scheduled using the DCI. Hereinafter, the downlink shared channel and the uplink shared channel are referred to as PDSCH and PUSCH, but may have other names.

The search space set is a set of one or more search spaces and may include a search space set (hereinafter, referred to as a "common search space (CSS) set") to be used in common between one or more terminals 10 and a terminal-specific search space set (UE-specific search space (USS) set). The terminal 10 receives information related to the configuration of each search space set, and configures each search space set based on the information related to the configuration.

For example, the terminal 10 may receive information (hereinafter, referred to as "paging search space configuration information", for example, RRC parameter "pagingSearchSpace") related to the configuration of the search space set for paging (hereinafter, referred to as "paging search space"), and may configure a paging search space (for example, Type2-PDCCH CSS set) based on the information. The terminal 10 may detect a DCI which is CRC scrambled using a specific RNTI (for example, a paging (P)-RNTI).

The terminal 10 receives a paging message through the PDSCH scheduled using the DCI. Here, the information indicating the P-RNTI may be configured by a predefined value. Hereinafter, the paging DCI may be DCI that is CRC scrambled with the P-RNTI. The format of the DCI may be, for example, a DCI format 1_0. Further, the terminal 10 may receive a short message based on the paging DCI.

The system information broadcasted by the cell C may include a master information block (MIB) and/or one or more system information blocks (SIBs). The MIB is broadcasted through a broadcast channel (for example, a physical broadcast channel (PBCH)). The MIB and an SIB1 are called Minimum System Information, and the SIB1 is called Remaining Minimum System Information (RMSI). An SIBx (x is any character string such as x = 2, 3, ...) other than the SIB1 is called other system information (OSI). The SIB1 and the SIBx other than the SIB1 are broadcasted through the PDSCH. The SIB1 may be cell-specific, and the SIBx other than the SIB1 may be cell-specific or specific to an area including one or more cells.

A block including at least one of the synchronization signal, the PBCH, and a PBCH Demodulation Reference signal (DM-RS) is called a Synchronization Signal Block (SSB). The SSB may be called an SS/PBCH block, an SS block, or the like. The SSB may be configured with a given number of symbols (for example, four consecutive symbols) as the time domain resource and a given number of subcarriers (for example, 240 consecutive subcarriers) as the frequency domain resource.

An SS burst set which is a set of one or more SSBs are transmitted at a given periodicity. The SS burst set may be called an SS burst or the like. Each SSB in the SS burst set is identified by an index (hereinafter, referred to as an "SSB index"). In the case of multi-beam operation, SSBs having different indexes in the SS burst set correspond to different beams and may be transmitted by sequentially switching a beam direction via beam sweeping. In the case of single-beam operation, an SSB (one or more SSBs) having a specific index in the SS burst set may be transmitted in all directions.

One or more Bandwidth Parts (BWPs) may be configured for one cell C. The BWP may include a BWP for the DL (hereinafter, referred to as a "DL BWP") and/or a BWP for the UL (hereinafter, referred to as a "UL BWP"). In addition, the BWP may include a BWP (hereinafter, referred to as an "initial BWP") configured to be cell-specific and a BWP (hereinafter, referred to as a "dedicated BWP") configured to be specific to the terminal 10. The initial BWP may be used for initial access and/or be common to one or more terminals 10. The initial BWP may include an initial BWP for the DL (hereinafter, referred to as an "initial DL BWP") and an initial BWP for the UL (hereinafter, referred to as an "initial UL BWP"). The dedicated BWP is called a "UE-specific BWP".

(Paging)

Paging is used for setting up a network-led connection when the terminal 10 is in an idle state or an inactive state. In addition, paging is used for transmission of a short message. The short message may be used for an indication to update the system information and/or a Public Warning System (PWS). In addition, the short message may be informed regardless of the state of the terminal 10. The PWS is, for example, an Earthquake and Tsunami Warning System (ETWS), a Commercial Mobile Alert System (CMAS), or the like.

Here, the idle state is a state in which RRC layer connection (hereinafter, referred to as "RRC connection") between the terminal 10 and the base station 20 is not established, and is called RRC_IDLE, an idle mode, an RRC-idle mode, or the like. The terminal 10 in the idle state receives the system information, the short message, and the paging message by monitoring a control channel in a serving cell. When the RRC connection is established, the terminal 10 in the idle state transitions to the connected state.

In addition, the inactive state is a state where the RRC connection is established but is suspended and is also called an RRC_INACTIVE state, an inactive mode, an RRC inactive mode, and the like. The terminal 10 in the inactive state receives the system information, the short message, and the paging message by monitoring the control channel in the serving cell. When the RRC connection is resumed, the terminal 10 in the inactive state transitions to the connected state, and when the RRC connection is released, the terminal 10 transitions to the idle state.

The connected state is a state where the RRC connection is established and is also called an RRC_CONNECTED state, a connected mode, an RRC connected mode, and the like. The terminal 10 in the connected state performs transmission and reception of various types of data including the system information and the short messages in the serving cell. When the RRC connection is released, the terminal 10 in the connected state transitions to the idle state, and when the RRC connection is suspended, the terminal 10 transitions to the inactive state.

The terminal 10 in the idle state and the inactive state performs cell selection and serves in a suitable cell that is found. In addition, the terminal 10 follows a cell reselection reference, and serves in the cell when a cell (more suitable cell) that satisfies the cell reselection reference is found.

The term "serve" may be referred to as "camp". For example, "serve in the cell" may be referred to as "camp on the cell". In addition, the "cell in which the terminal serves (serving cell)" may be referred to as a "camping cell", a "synchronizing cell", a "serving cell", a "cell configured in the terminal 10", or the like.

When it is necessary to transmit a message to the terminal 10 in the idle state, the network (for example, the base station 20 and/or the core network 30) may transmit a short message or a paging message to all the cells in a set of a Tracking Area (TA) including the cell in which the terminal 10 serves. In addition, when it is necessary to transmit a message to the terminal 10 in the inactive state, the network (for example, the base station 20 and/or the core network 30) may transmit a paging message in all the cells of the RAN Notification Area (RNA) in which the terminal 10 serves. The network (for example, the base station 20 and/or the core network 30) may, for example, transmit the paging message in a cell in which the terminal 10 has last established the RRC connection, and transmit the paging message in another cell within a TA set or the RNA when there is no response from the terminal 10 in the cell.

One or more cells are associated with a TA. The TA is identified by a Tracking Area Identifier (TAI). The core network 30 manages the registration area of the terminal 10 in units of TA set.

When a registration procedure with the terminal 10 is performed, the core network 30 (for example, AMF) assigns the TAI list indicating the TA set as a registration area to the terminal 10. The TAI list includes at least the TAI of the TA corresponding to the cell in which the terminal 10 serves. In addition, when the TAI (current TAI) of the cell in which the terminal 10 serves is not in the TAI list, the terminal 10 performs a registration update procedure (Mobility Registration Update Procedure) to inform the core network 30 (for example, the AMF) that the terminal 10 has moved outside the TAI list (that is, has moved outside the registration area). The core network 30 that has received the notification updates the TAI list of the terminal 10.

The RNA covers one or more cells and is included within the registration area (that is, the TA set) in the core network 30. That is, the RNA may be an area in which the registration area is subdivided. The terminal 10 in the inactive state can move without informing the base station 20 as long as in the area configured by the RNA. When the terminal 10 selects a cell that does not belong to the RNA configured for the terminal 10 in the cell reselection procedure, the terminal 10 transmits an RAN-based notification area update to the base station 20. When the base station 20 (also referred to as a "last serving gnB"), which indicated the terminal 10 to transition to the inactive state, receives the signal related to the terminal 10 from the core network 30, the base station 20 performs the paging in a cell corresponding to the RNA. In addition, when a cell of another base station 20 (also referred to as a neighboring base station 20) is included in the RNA, the base station 20 may transmit the RAN paging message to the other base station 20 in order to perform the paging on the other base station 20. The terminal 10 in the inactive state that has received the paging signal resumes the RRC connection and transitions to the connected state.

Paging started by the core network 30 and performed with respect to the terminal 10 in the idle state may be referred to as "CN paging". Paging started by the base station 20 and performed with respect to the terminal 10 in the inactive state may be referred to as "RAN paging".

The terminal 10 performs Discontinuous Reception (DRX) to reduce power consumption. Specifically, the terminal 10 is capable of performing PDCCH monitoring in a Paging Occasion (PO) and sleeping in a period other than the PO.

The PO is a given period configured with one or more time units (for example, one or more symbols, one or more slots, or one or more subframes). The PO may be configured with, for example, a set of one or more PDCCH monitoring occasions. The PO may be provided at a given periodicity. The PO may be provided in a Paging Frame (PF). A Radio Frame (RF) configuring the PF is a given time unit (for example, a time unit configured with 10 subframes), and is identified by an identification number (hereinafter, referred to as a "System Frame Number (SFN)"). One or more PFs may be provided in a DRX periodicity. The DRX periodicity is also called a paging cycle.

In the terminal 10, information (hereinafter, referred to as "PCCH-Config") related to the configuration of paging in the BWP may be configured by the base station 20. PCCH-Config may include at least one of information (hereinafter, referred to as "PagingCycle") related to the DRX periodicity, information (hereinafter, referred to as "firstPDCCH-MonitoringOccasionOfPO") related to a first PDCCH-monitoring occasion of the PO, information (hereinafter, referred to as "nAndPagingFrameOffset") indicating the number of PFs in the paging cycle and/or a time offset, information (hereinafter, referred to as "ns") related to the number of POs per PF, and information (hereinafter, referred to as "nrofPDCCH-MonitoringOccasionPerSSB-InPO") related to the number of PDCCH monitoring occasions per SSB in the PO. The PCCH-Config may be a cell-specific RRC parameter.

The terminal 10 determines the PF for the terminal 10 based on at least one of a DRX periodicity, the number of PFs in the DRX periodicity, the time offset, or an identifier of the terminal 10. Here, for example, the terminal 10 may determine the SFN constituting the PF based on the following Expression (1).

$$(SFN + PF\_offset) \bmod T = (T \ div \ N) * (UE\_ID \bmod N)$$

Here, T is the DRX periodicity determined based on the PagingCycle, N and PF_offset are the number of PFs in T and a given offset determined based on the nAndPagingFrameOffset, and UE_ID is a value determined based on the identifier of the terminal 10 (for example, 5G S-Temporary Mobile Subscription Identifier (5GS-TMSI)). PagingCycle may indicate, for example, 32, 64, 128, or 256 RFs. nAndPagingFrameOffset may indicate positioning of the PF for every x RFs in T (for example, x = 1, 2, 4, 8, or 16) and/or the time offset.

The terminal 10 may determine the PO in the PF based on at least one of an ID of the search space used as the paging search space, firstPDCCH-MonitoringOccasionOfPO described above, or nrofPDCCH-MonitoringOccasion-PerSSB-InPO described above. The PO may be configured with, for example, S * X consecutive PDCCH monitoring occasions (for example, S * X consecutive symbols excluding an UL symbol) from a time location indicated by firstPDCCH-MonitoringOccasionOfPO. Each PDCCH monitoring occasion in the PO may be configured with a given number of symbols. The firstPDCCH-MonitoringOccasionOfPO may indicate, for example, the time location (for example, the location of the symbol) of the first PDCCH monitoring occasion in the PF. S may be the number of SSBs actually transmitted in the SS burst set, and X may be the number of PDCCH monitoring occasions per SSB in the PO.

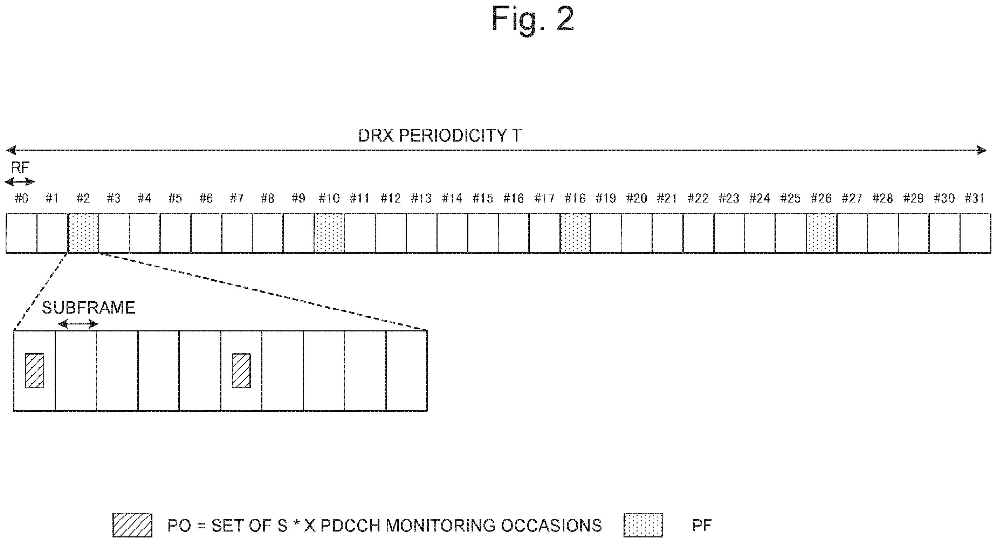

Fig. 2 is a diagram illustrating an example of the PO according to the present embodiment. As illustrated in Fig. 2, the PF is disposed every given number of RFs (here, 8 RFs) in the DRX periodicity (here, 32 RFs). The terminal 10 may determine the PF (here, PF #2) for the terminal 10 using, for example, Expression 1, based on the UE_ID. For example, in Fig. 2, the number of POs included in PF #2 for the terminal 10 is two, but is not limited thereto, and the number of POs per PF may be one or more.

The terminal 10 controls establishment of connection with a network side (for example, the base station 20 and/or the core network 30) based on a list (for example, RRC parameter "pagingRecordList") of one or more terminal identifiers in the paging message received in the PO and a terminal identifier assigned to the terminal 10. For example, when the terminal identifier assigned to the terminal 10 is included in the list, the terminal 10 may start a procedure for establishing the connection with the network side. Here, the terminal identifier is an identifier of the terminal 10, and may be, for example, a 5G-S-TMSI or may be determined based on the 5G-S-TMSI.

According to the above Expression (1), a plurality of terminals 10 may be assigned to the same PO. On the other hand, even when the terminal 10 receives the paging DCI, it is not possible to discriminate which terminal 10 the paging is directed to unless the list of terminal identifiers in the paging message is decoded. Therefore, the terminal 10 needs a processing of discriminating whether or not the paging for the terminal 10 is performed for each PO. As a result, there is a problem in that the terminal 10 that is not a paging target consumes power unnecessarily.

(PEI)

Currently, in 3GPP, in order to reduce unnecessary power consumption of the terminal 10 that is not the paging target, it is considered to inform the terminal 10 of the PEI information related to the paging in one or more POs and control the terminal operation in the POs based on the PEI information. For example, it is considered that a group composed of a plurality of terminals 10 using the same PO is divided into a plurality of subgroups, and information (hereinafter, referred to as "subgroup information") related to the subgroups that are paging targets in the PO is included in the PEI information.

The subgrouping of each terminal 10 may be performed on a terminal identifier base or may be performed on a network base. The PEI information may be referred to as "PEI".

In a case of the terminal identifier base, the terminal 10 may determine the subgroup assigned to the terminal 10 based on the terminal identifier or the UE_ID. Specifically, the terminal 10 may determine an identifier of the subgroup (hereinafter, referred to as "subgroup ID") based on at least one of the number N of PFs in the DRX periodicity T, the number Ns of POs per PF, and the total number Nsg of subgroups in addition to the terminal identifier.

On the other hand, in a case of the network base, the base station 20 or the core network 30 may determine the subgroup to be assigned to the terminal 10 based on information managed on the network side (for example, the mobility state of the terminal 10, the paging probability, and/or the power consumption profile of the terminal 10, the attribute of the terminal 10 related to the movement amount, and the like). The base station 20 or the core network 30 may inform the terminal 10 of information (for example, a subgroup ID) indicating the determined subgroup using a Network Access Stratum (NAS) message, an RRC message, or the like.

The subgroup information may be, for example, information (for example, a 1-bit value) indicating whether or not paging is performed for every subgroup (that is, whether paging is performed for every subgroup or every group). Alternatively, the subgroup information may be information (hereinafter, referred to as "paging subgroup indication information") indicating which subgroup is the paging target in one or more POs. One or more POs may be included in a single PF, or may be included in a plurality of PFs. For example, the PEI may correspond to a maximum of 4 POs in 1 PF.

For example, the terminal 10 that shares each PO is divided into a given number of subgroups (for example, a maximum of 8 subgroups), and the paging subgroup indication information may indicate whether or not each subgroup is the paging target (presence or absence of the paging message for each subgroup) in each PO. The paging subgroup indication information may be, for example, a bitmap of the number of bits corresponding to the number of subgroups of one or more POs, or information indicating an identifier of a subgroup that is the paging target in each PO.

The PEI information may be included in the DCI transmitted by the PDCCH.

The DCI including the PEI information is also referred to as "PEI DCI", "first downlink control information", or the like. The PEI DCI may include information related to the short message in addition to the PEI information.

The terminal 10 may determine the time location of the PDCCH monitoring occasion for PEI DCI (hereinafter, referred to as "PEI-O") based on a PO (hereinafter, referred to as "target PO") indicating which subgroup is the paging target by the PEI DCI detected in the PEI-O. For example, the time location of the PEI-O may be determined based on a time offset (for example, a time offset at a frame level) with respect to the PF including the target PO. Alternatively, the time location of PEI-O may be determined based on the SSB or the SS burst before the target PO. The SS burst may be, for example, an L-th (for example, L = 1, 2 or 3) SS burst before the first PDCCH monitoring occasion before the PO. Alternatively, the time location of the PEI-O may be determined based on a time offset with respect to the target PO.

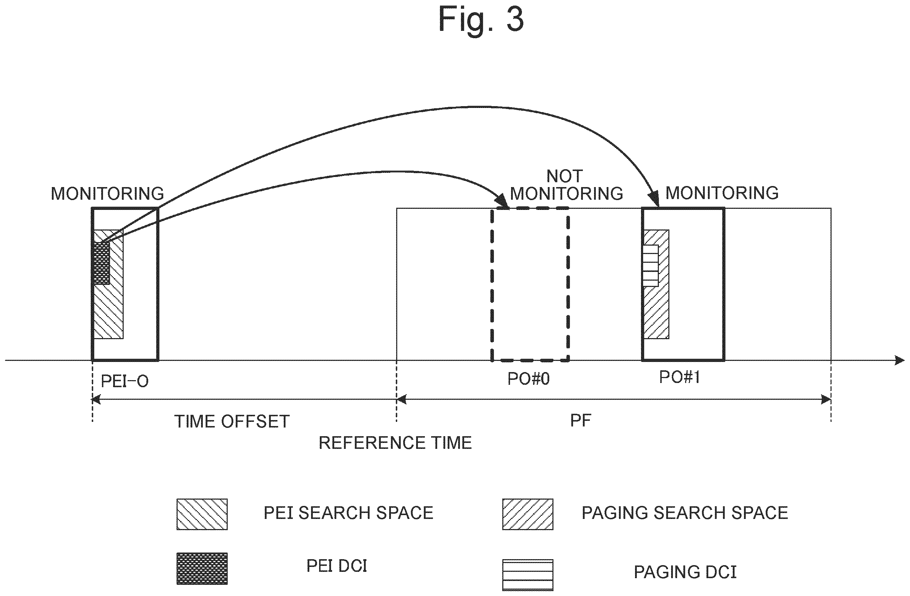

Fig. 3 is a diagram illustrating an example of the relationship between the PEI-O and the POs according to the present embodiment. As illustrated in Fig. 3, the PEI-O may be provided with a search space set (hereinafter, referred to as "PEI search space") used for monitoring the PEI DCI. The PEI DCI detected by monitoring the PEI search space may correspond to one or more POs (for example, a maximum of 4 POs per 1 PF). One PEI DCI may correspond to a plurality of POs straddling a plurality of PFs, or may correspond to one or more POs in a single PF. In addition, a plurality of PEI DCIs may correspond to one PO.

For example, in Fig. 3, the start timing of the PEI-O is determined by using the start timing of the PF including POs #0 and #1 as the reference time and a time offset with respect to the reference time (for example, a time offset at an RF level).

In Fig. 3, the terminal 10 in an idle state or an inactive state detects the PEI DCI by monitoring the PEI search space. The terminal 10 skips the monitoring of the paging search space in PO#0 based on the subgroup information in the PEI DCI. On the other hand, the terminal 10 monitors the paging DCI in the paging search space in PO#1 based on the subgroup information in the PEI DCI.

As described above, since the terminal 10 that has received the PEI information can skip the monitoring of the paging DCI in the PO based on the subgroup designated by the PEI information, the power consumption of the terminal 10 can be reduced. On the other hand, in addition to the paging in the related art, the base station 20 transmits the PEI information in the PEI-O before the POs, so that radio resource consumption amount increases. In addition, the paging is performed on all the cells, in which the terminal 10 serves and which are included in the TAI list or the RNA, and, when the PEI information is transmitted to all the cells each time the paging is performed, the radio resource consumption amount further increases. Therefore, in order to solve such a problem, it is desired to appropriately control the transmission and reception of the PEI information in consideration of the balance between the reduction in power consumption of the terminal 10 and the increase in the radio resource consumption amount.

Therefore, in the present embodiment, information (hereinafter, "PEI transmission area information") related to the cell to which the PEI information is transmitted is shared between the terminal 10, the base station 20, and the core network 30, and the terminal 10 and the base station 20 perform transmission and reception of the PEI information according to the information.

(Paging for terminal in idle state)

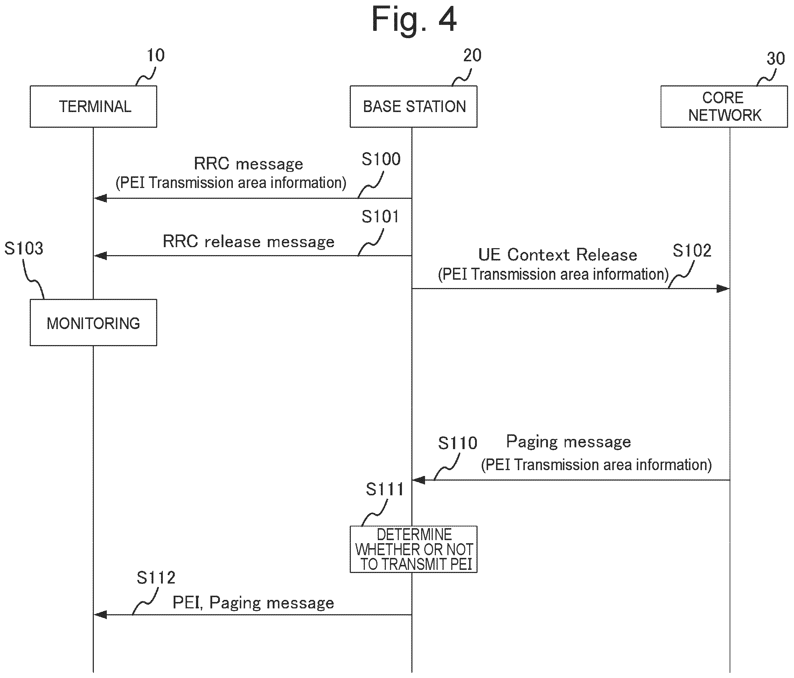

Fig. 4 is a sequence diagram illustrating an example of a processing procedure for the terminal 10 in the idle state. In Fig. 4, it is assumed that the RRC state of the terminal 10 is the connected state. In addition, the core network 30 in Fig. 4 may be, for example, an AMF, but is not limited thereto.

In step S100, the base station 20 transmits the RRC message including the PEI transmission area information to the terminal 10. Here, the base station 20 may select a range of the transmission area of the PEI information (hereinafter, referred to as a "PEI transmission area") from any one of the transmission area patterns 1 to 3 shown below, and may transmit information indicating the selected transmission area pattern as the PEI transmission area information.

· Transmission area pattern 1: the PEI information is transmitted in a cell in which the RRC connection is released (hereinafter, referred to as a "last cell"). The last cell may be referred to as a cell in which the terminal 10 has transitioned from the connected state to the idle state or the inactive state, or a cell in which the RRC release message is received.

· Transmission area pattern 2: the PEI information is transmitted in the cell included in the cell list. Identifiers of one or more cells are configured in the cell list. It is assumed that the cell list includes the last cell, but is not necessarily limited thereto. For example, when the radio resource of the last cell is congested, a cell list which does not include the last cell may be generated.

· Transmission area pattern 3: the PEI information is transmitted in a cell included in the TAI list. The transmission area pattern 3 is applied to the idle state and is not applied to the inactive state.

The RRC message transmitted in step S100 may be an RRC message for each terminal 10. The RRC message for each terminal 10 may be, for example, an RRC setup message, an RRC reconfiguration message, an RRC resume message, or an RRC reestablishment message.

In step S101, the base station 20 transmits the RRC release message to the terminal 10 in order to transition to the idle state. The processing procedures of step S100 and step S101 may be performed simultaneously. That is, the base station 20 may transmit the RRC release message including the PEI transmission area information to the terminal 10.

In step S102, after the RRC connection is disconnected in the processing procedure of step S101, the base station 20 transmits a release request message requesting the release of the connection (for example, the UE-associated logical NG-connection) associated with the terminal 10 to the core network 30. The release request message may be, for example, a UE CONTEXT RELEASE REQUEST. Here, the base station 20 may transmit the release request message including the PEI transmission area information (third information) having the same content as the PEI information transmitted to the terminal 10. The PEI transmission area information included in the release request message may be information that means the same content as the transmission area patterns 1 to 3, and may not have the same format as the PEI transmission area information transmitted by the RRC message.

In step S103, the terminal 10 that has received the RRC release message transitions from the connected state to the idle state, and starts monitoring of the PEI-O and/or the PO. When the serving cell is included in the cell indicated by the PEI transmission area information, the terminal 10 monitors the PEI DCI (first downlink control information) in the PEI search space of the PEI-O (first search space set). When the PEI DCI is detected, the terminal 10 controls whether or not to perform or skip monitoring of the paging DCI (second downlink control information) in the paging search space (second search space set) of the PO based on the subgroup information in the PEI DCI. The terminal 10 recognizes which PO corresponds to which subgroup based on the subgroup information, performs the monitoring in the paging search space of the PO corresponding to the subgroup to which the terminal 10 is assigned, and skips the monitoring in the PO that does not correspond to the subgroup to which the terminal 10 is assigned.

In addition, when the serving cell is not included in the cell indicated by the PEI transmission area information, the terminal 10 monitors the paging DCI in the paging search space of the PO without monitoring the PEI DCI in the PEI search space of the PEI-O.

For example, when the transmission area pattern 1 is designated by the PEI transmission area information, the terminal 10 monitors the PEI-O and monitors/skips the PO while the terminal 10 serves in the cell in which the RRC connection is released after the RRC connection is released and the terminal 10 transitions to the idle state. On the other hand, when the terminal 10 serves in a cell different from the cell in which the RRC connection is released by the cell reselection, the terminal 10 monitors the PO without monitoring the PEI-O. In addition, when the terminal 10 serves (in a case of being returned) in the cell in which the RRC connection is released again by the cell reselection, the terminal 10 may (resume) monitor the PEI-O and monitor/skip the PO in the cell.

For example, when the transmission area pattern 2 is designated by the PEI transmission area information, the terminal 10 monitors the PEI-O and monitors/skips the PO while the terminal 10 serves in one or more cells included in the cell list after the RRC connection is released and the terminal 10 transitions to the idle state. On the other hand, when the terminal 10 serves in a cell different from one or more cells included in the cell list by the cell reselection, the terminal 10 monitors the PO without monitoring the PEI-O. In addition, when the terminal 10 serves (in a case of being returned) in the cell included in the cell list again by the cell reselection, the terminal 10 may (resume) monitor PEI-O and monitor/skip the PO in the cell.

For example, when the transmission area pattern 3 is designated by the PEI transmission area information, the terminal 10 monitors the PEI-O and monitors/skips the PO while the terminal 10 serves in a cell included in one or more TAs within the TAI list configured in the terminal 10 after the RRC connection is released and the terminal 10 transitions to the idle state. On the other hand, when the terminal 10 serves in a cell different from the cell included in one or more TAs within the TAI list by the cell reselection, the terminal 10 monitors the PO without monitoring the PEI-O. In addition, when the terminal 10 serves (in a case of being returned) in the cell included in one or more TAs in the TAI list again by the cell reselection, the terminal 10 may (resume) monitor the PEI-O and monitor/skip the PO in the cell.

When the PEI transmission area information is not configured, the terminal 10 monitors the PO without monitoring the PEI-O. In addition, even when the PEI transmission area information is configured and the PEI DCI is not detected even by monitoring the PEI-O, the terminal 10 may not perform (skip) the monitoring of each PO existing until a next PEI-O starts. In addition, even when the PEI transmission area information is configured and the monitoring of the PEI-O is not possible (monitoring is not performed) for some causes (for example, a reception frequency is changed in order to perform the cell reselection or the like), the terminal 10 may perform the monitoring of each PO existing until the next PEI-O starts.

In step S110, when the paging is triggered, for example, due to a reason in which the data to be transmitted to the terminal 10 is generated, the core network 30 transmits the paging message including the PEI transmission area information (fourth information) to the base station 20 of the cell corresponding to the registration area (that is, the TAI list configured in the terminal 10) of the terminal 10. The core network 30 may transmit the paging message which does not include the PEI transmission area information (fourth information) to the base station 20 which does not transmit the PEI information (that is, the base station 20 which does not correspond to the cell of the PEI transmission area) among the base stations 20 that transmit the paging message.

In addition, when the core network 30 assigns a subgroup to the terminal 10, the core network 30 may include, in the paging message, information indicating the subgroup assigned to the terminal 10 in addition to the PEI transmission area information.

In step S111, the base station 20 determines whether or not to transmit the PEI information when performing the paging, based on the PEI transmission area information included in the paging message.

In step S112, when the paging message is transmitted to the terminal 10 in the cell designated by the PEI transmission area information, the base station 20 transmits the PEI DCI including the subgroup information indicating the subgroup of the terminal 10 in the PEI search space (first search space set) of the PEI-O. In addition, the base station 20 transmits the paging DCI in the paging search space of the PO corresponding to the subgroup, and transmits the paging message including the terminal identifier of the terminal 10 via the PDSCH scheduled with the paging DCI. On the other hand, when the base station 20 transmits the paging message to the terminal 10 in the cell that is not designated by the PEI transmission area information, the paging is performed without transmitting the PEI information. That is, the base station 20 transmits the paging DCI in the paging search space of the PO, and transmits the paging message including the terminal identifier of the terminal 10 via the PDSCH scheduled with the paging DCI.

In step S100 of the processing procedures described above, the PEI transmission area information may be transmitted as the system information. In this case, since the PEI transmission area information cannot be configured for each terminal 10, for example, the PEI transmission area information may be information indicating whether the cell is a cell to which the PEI information is transmitted or a cell to which the PEI information is not transmitted. In addition, the PEI transmission area information may be information indicating whether the cell is a cell to which the PEI information is transmitted or a cell to which the PEI information is not transmitted, for each subgroup.

In addition, in the processing procedures described above, when the disconnection of the RRC connection is requested from the core network 30, the core network 30 may transmit a release request message requesting the release of the connection (for example, the UE-associated logical NG-connection) associated with the terminal 10. The release request message may be, for example, a UE CONTEXT RELEASE COMMAND. The base station 20 that receives the release request message may perform the processing procedure of step S100. In addition, in the processing procedure of step S102, the base station 20 may transmit a release completion message indicating that the release of the connection is completed, instead of the release request message. The release request message may be, for example, a UE CONTEXT RELEASE COMPLETE. Here, the base station 20 may transmit the release completion message including the PEI transmission area information (third information). The PEI transmission area information included in the release completion message may be information that means the same content as the parameters 1 to 3, and may not have the same format as the PEI transmission area information transmitted by the RRC message.

In addition, in the processing procedures described above, the names of the release request message in step S102 and the paging message in step S110 are merely examples, and the present disclosure is not limited thereto. The release request message and the paging message may be referred to as a first message and a second message, respectively.

(Supplementary note on PEI transmission area notification method)

When the PEI transmission area is the transmission area pattern 1, the base station 20 may transmit the cell identifier (for example, the Cellidentity) of the last cell as the PEI transmission area information to the core network 30 in the processing procedure of step S102. In addition, in the processing procedure of step S110, the core network 30 may transmit a paging message including the cell identifier of the last cell as the PEI transmission area information to the base station 20 of the last cell. In addition, the core network 30 may transmit a paging message which does not include the PEI transmission area information to the base station 20 in a cell other than the last cell. In addition, when the core network 30 assigns the subgroup to the terminal 10, the core network 30 may transmit a paging message which does not include the PEI transmission area information and the information indicating the subgroup assigned to the terminal 10 to the base station 20 in a cell other than the last cell.

When the PEI transmission area is the transmission area pattern 2, the base station 20 may transmit the cell list that includes the identifiers of one or more cells to which the PEI information is transmitted to the core network 30 as the PEI transmission area information in the processing procedure of step S102. In addition, the core network 30 may transmit a paging message including the cell list (or a cell list in which only cells covered by the base station 20 are extracted from the cell list) as the PEI transmission area information to the base station 20 in the cells of the cell list in the processing procedure of step S110. In addition, the core network 30 may transmit a paging message which does not include the PEI transmission area information to the base station 20 in a cell other than the cells in the cell list. In addition, when the core network 30 assigns the subgroup to the terminal 10, the core network 30 may transmit a paging message, which does not include the PEI transmission area information and the information indicating the subgroup assigned to the terminal 10, to the base station 20 in the cell other than the cells in the cell list.

When the PEI transmission area is the transmission area pattern 3, the base station 20 may transmit the TAI list to the core network 30 as the PEI transmission area information in the processing procedure of step S102. When the PEI transmission area is determined by the core network 30, the core network 30 does not need to transmit the TAI list from the base station 20 to the core network 30 because the core network 30 grasps the TAI list configured for the terminal 10. Therefore, when the core network 30 determines the PEI transmission area, the base station 20 may transmit the release request message which does not include the PEI transmission area information to the core network 30. In addition, in the processing procedure of step S110, the core network 30 may transmit a paging message including the TAI list (or a TAI list in which only TAs of the cells covered by the base station 20 are extracted from cells in the TAI list) as the PEI transmission area information to the base station 20 in the cells within the TAI list.

(Paging to terminal in inactive state)

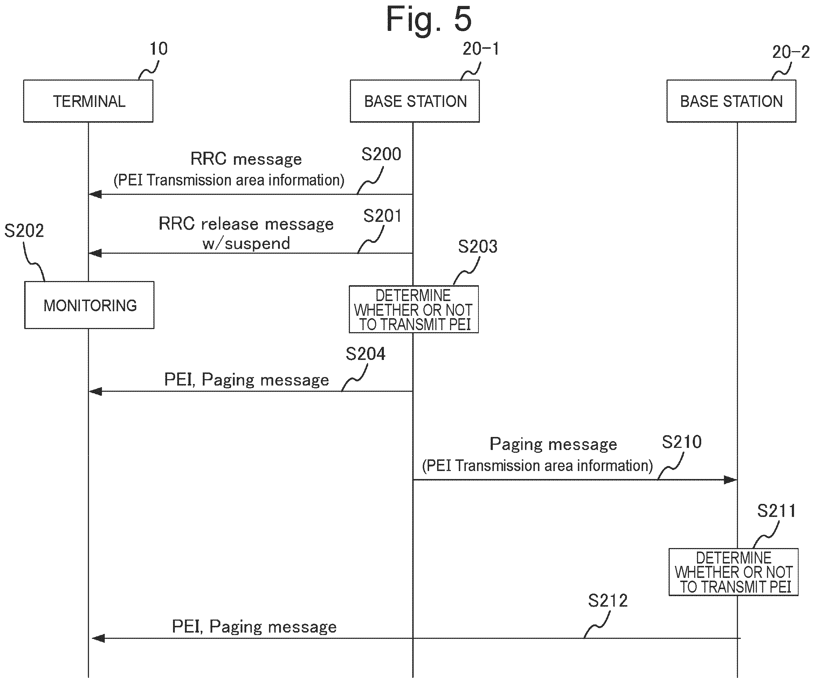

Fig. 5 is a sequence diagram illustrating an example of a processing procedure for the terminal 10 in the inactive state. In Fig. 5, it is assumed that the RRC state of the terminal 10 is the inactive state. In addition, a base station 20-1 in Fig. 5 is the base station 20 of the cell in which the terminal 10 serves last, and may be referred to as a serving base station 20. The base station 20-2 may be a base station 20 of another cell included in the RNA corresponding to the cell in which the terminal 10 serves last, and may be referred to as a neighbour base station 20.

In step S200, the base station 20-1 transmits an RRC message including the PEI transmission area information to the terminal 10. Here, the base station 20-1 may select any one of the transmission area patterns 1 and 2 described above and a transmission area pattern 4 shown below as the PEI transmission area, and may transmit the information indicating the selected transmission area pattern as the PEI transmission area information.

· Transmission area pattern 4: PEI information is transmitted in the cell included in the RNA.

The transmission area pattern 4 is applied to the inactive state and is not applied to the idle state.

The RRC message transmitted in step S200 may be an RRC message for each terminal 10. The RRC message for each terminal 10 may be, for example, an RRC setup message, an RRC reconfiguration message, an RRC resume message, or an RRC reestablishment message.

In step S201, the base station 20-1 transmits the RRC release message to the terminal 10 in order to transition to the inactive state. The RRC release message includes a parameter (for example, SuspendConfig) indicating configuration information related to the inactive state. The processing procedures of step S200 and step S201 may be performed simultaneously. That is, the base station 20-1 may transmit the RRC release message including the PEI transmission area information to the terminal 10.

In step S202, the terminal 10 that has received the RRC release message transitions from the connected state to the inactive state, and starts the monitoring of the PEI-O and/or the PO. For example, when the transmission area pattern 4 is designated by the PEI transmission area information, the terminal 10 monitors the PEI-O and monitors/skips the PO while the terminal 10 serves in one or more cells in the RNA configured in the terminal 10 after the RRC connection is released and the terminal 10 transitions to the inactive state. On the other hand, when the terminal 10 serves in a cell different from the cell included in the RNA by the cell reselection, the terminal 10 monitors the PO without monitoring the PEI-O. In addition, when the terminal 10 serves (in a case of being returned) in the cell included the RNA again by the cell reselection, the terminal 10 may (resume) monitor the PEI-O and monitor/skip the PO in the cell. The other points not mentioned are the same as in the processing procedure of step S103 in Fig. 4, except for the processing when the transmission area pattern 3 is designated.

In step S203, when the paging is triggered, for example, due to a reason in which data to be transmitted to the terminal 10 is arrived from the core network 30, the base station 20-1 determines whether or not to transmit the PEI information when performing the paging based on the PEI transmission area information that is configured for the terminal 10 in the processing procedure of step S200.

In step S204, when the PEI transmission area information is configured for the terminal 10 in the processing procedure of step S200, the base station 20-1 transmits the PEI DCI including the subgroup information indicating the subgroup of the terminal 10 in the PEI search space (first search space set) of the PEI-O. In addition, the base station 20-1 transmits the paging DCI in the paging search space of the PO corresponding to the subgroup, and transmits the paging message including the terminal identifier of the terminal 10 via the PDSCH scheduled with the paging DCI. On the other hand, when the PEI transmission area information is not configured for the terminal 10 in the processing procedure of step S200, the base station 20-1 performs the paging without transmitting the PEI information. That is, the base station 20-1 transmits the paging DCI in the paging search space of the PO, and transmits the paging message including the terminal identifier of the terminal 10 via the PDSCH scheduled with the paging DCI.

In step S210, for example, when there is no response from the terminal 10 in the processing procedure of step S204, the base station 20-1 transmits the paging message (third message) including the PEI transmission area information (fifth information) to the base station 20-2 in order to perform the paging of another base station 20-2 in the RNA. When the core network 30 assigns the subgroup to the terminal 10, the base station 20-1 may cause the paging message to include information indicating the subgroup assigned to the terminal 10 in addition to the PEI transmission area information. Here, the PEI transmission area information included in the paging message may be information that means the same content as the parameter 1, 2, or 4, and may not have the same format as the PEI transmission area information transmitted by the RRC message in step S200.

In step S211, the base station 20-2 determines whether or not to transmit the PEI information when performing the paging based on the PEI transmission area information received in the processing procedure of step S210.

In step S212, when the paging message is transmitted to the terminal 10 in the cell designated by the received PEI transmission area information, the base station 20-2 transmits the PEI DCI including the subgroup information indicating the subgroup of the terminal 10 in the PEI search space (first search space set) of the PEI-O. In addition, after transmitting the PEI DCI, the base station 20 transmits the paging DCI in the paging search space of the PO corresponding to the subgroup, and transmits the paging message including the terminal identifier of the terminal 10 via the PDSCH scheduled with the paging DCI. On the other hand, when the base station 20 transmits the paging message to the terminal 10 in the cell that is not designated by the PEI transmission area information, the paging is performed without transmitting the PEI information. That is, the base station 20 transmits the paging DCI in the paging search space of the PO, and transmits the paging message including the terminal identifier of the terminal 10 via the PDSCH scheduled with the paging DCI.

In the processing procedures described above, the name of the paging message in step S210 is merely an example, and the present disclosure is not limited thereto. The paging message may be referred to as a third message.

(Supplementary note on PEI transmission area notification method)

When the PEI transmission area is the transmission area pattern 1, the base station 20 that transmits the PEI information in the RNA is only the base station 20-1. Therefore, in the processing procedure of step S210, the base station 20-1 may transmit the paging message which does not include the PEI transmission area information to the base station 20-2. In addition, when the core network 30 assigns the subgroup to the terminal 10, in the processing procedure of step S210, the base station 20-1 may transmit the paging message which does not include the PEI transmission area information and the information indicating the subgroup assigned to the terminal 10 to the base station 20-2. In addition, the base station 20-2 may perform the paging without transmitting the PEI information in the processing procedure of step S212.

When the PEI transmission area is the transmission area pattern 2, the base station 20-1 may, in the processing procedure of step S210, transmit the cell list that includes the identifiers of one or more cells that transmit the PEI information (or the cell list, in which only the cells covered by the base station 20-2 are extracted in the cell list) as the PEI transmission area information to the base station 20-2. The base station 20-1 may transmit a paging message which does not include the PEI transmission area information to the base station 20-2 of the cell that is not included in the cell list. In addition, when the core network 30 assigns the subgroup to the terminal 10, the base station 20-1 may, in the processing procedure of step S210, transmit a paging message which does not include the PEI transmission area information and the information indicating the subgroup assigned to the terminal 10 to the base station 20-2 of the cell that is not included in the cell list.

When the PEI transmission area is the transmission area pattern 4, the base station 20-1 may transmit a list indicating cells in the RNA (or a list in which only the cells covered by the base station 20-2 are extracted from the cells in the RNA) as the PEI transmission area information to the base station 20-2 in the processing procedure of step S210.

(PEI transmission area determining method)

The PEI transmission area may be determined by the base station 20 or the core network 30 based on the attribute of the terminal 10. The attribute of the terminal 10 is, for example, the movement amount of the terminal 10, and the transmission area pattern 1 or the transmission area pattern 2 may be applied to the terminal 10 having a small movement amount, and the transmission area pattern 3 or the transmission area pattern 4 may be applied to the terminal 10 having a large movement amount. The movement amount of the terminal 10 may be determined based on, for example, information related to the movement amount of the terminal 10 configured by the system information. For example, when the terminal 10 satisfies a stationary mobility evaluation standard, when the terminal 10 satisfies a low mobility evaluation standard, or when the terminal 10 satisfies a cell edge evaluation standard, it may be determined that the movement amount of the terminal 10 is small, and when the terminal 10 does not satisfy the standards, it may be determined that the movement amount of the terminal 10 is large. The terminal 10 may inform the base station 20 and/or the core network 30 of information indicating whether or not the terminal 10 satisfies the standards.

In addition, the movement amount of the terminal 10 may be determined by the base station 20 or the core network 30 based on, for example, information (for example, UE history information) indicating a movement history of the terminal 10, which is reported from the terminal 10. For example, when the number of cells included in the information is equal to or less than a given threshold value, it may be determined that the movement amount of the terminal 10 is small, and, when the number of cells included in the information exceeds the given threshold value, it may be determined that the movement amount of the terminal 10 is large.

In addition, when the core network 30 assigns the subgroup to the terminal 10, the core network 30 may determine the PEI transmission area based on the subgroup assigned to the terminal 10. That is, the PEI transmission area may be associated with the subgroup. For example, the core network 30 may set the terminal 10 having a small movement amount as a subgroup 1 and the transmission area pattern 1 or 2, and may set the terminal 10 having a large movement amount as the subgroup 2 and the transmission area pattern 3 or 4.

(Modified examples)

When the terminal 10 transitions from the connected state to the idle state and the PEI transmission area information is not configured, it may be assumed that the PEI information is transmitted within the cell in the TAI list that is configured for the terminal 10. That is, the terminal 10 may perform the monitoring of the PEI-O, assuming that the PEI information is transmitted according to the transmission area pattern 3.

In addition, when the terminal 10 transitions from the connected state to the idle state and the PEI transmission area information is not configured, it may be assumed that the PEI information is transmitted in the last cell. That is, the terminal 10 may perform the monitoring of the PEI-O, assuming that the PEI information is transmitted according to the transmission area pattern 1.

In addition, when the terminal 10 transitions from the connected state to the inactive state and the PEI transmission area information is not configured, it may be assumed that the PEI information may be transmitted in the cell in the RNA configured for the terminal 10. That is, the terminal 10 may monitor the PEI-O, assuming that the PEI information is transmitted according to the transmission area pattern 4.

In addition, when the terminal 10 transitions from the connected state to the inactive state and the PEI transmission area information is not configured, it may be assumed that the PEI information is transmitted in the last cell. That is, the terminal 10 may perform the monitoring of the PEI-O, assuming that the PEI information is transmitted according to the transmission area pattern 1. When the PEI transmission area information is configured and the terminal 10 which has transitioned to the idle state or the inactive state transitions to the connected state again and the serving cell is included in the cell indicated by the PEI transmission area information (second information), the terminal 10 may monitor the paging DCI in the PO without monitoring the PEI DCI in the PEI-O. That is, the terminal 10 in the connected state may monitor the paging DCI by the PO in order to receive the short message without monitoring the PEI-O even when the PEI transmission area information is configured. As a result, it is possible to suppress an increase in power consumption as the terminal 10 in the connected state performs unnecessary monitoring of the PEI-O.

According to the processing procedures described above, the terminal 10 operates so as to monitor the PEI-O in a range of the configured PEI transmission area and so as not to monitor the PEI-O other than a range of the configured PEI transmission area. As a result, the terminal 10 can recognize the cell to which the PEI information is transmitted, and can appropriately control the monitoring of the PEI information. In addition, the base station 20 or the core network 30 can configure the PEI transmission area according to the attribute of the terminal 10. As a result, for example, when the PEI information is transmitted to the terminal 10 (that is, the terminal 10 that is assumed to stay in the last cell in many cases) having a small movement amount by limiting to the last cell, it is possible to suppress the increase in the radio resource while reducing the power consumption of the terminal 10. In addition, by transmitting the PEI information in the cell within the TAI list or the RNA to the terminal 10 that has a large movement amount (that is, the terminal 10 that is assumed to rarely stay in the last cell), the number of times that the terminal 10 monitors the PO can be suppressed and the power consumption of the terminal 10 can be reduced.

(Specification change examples)

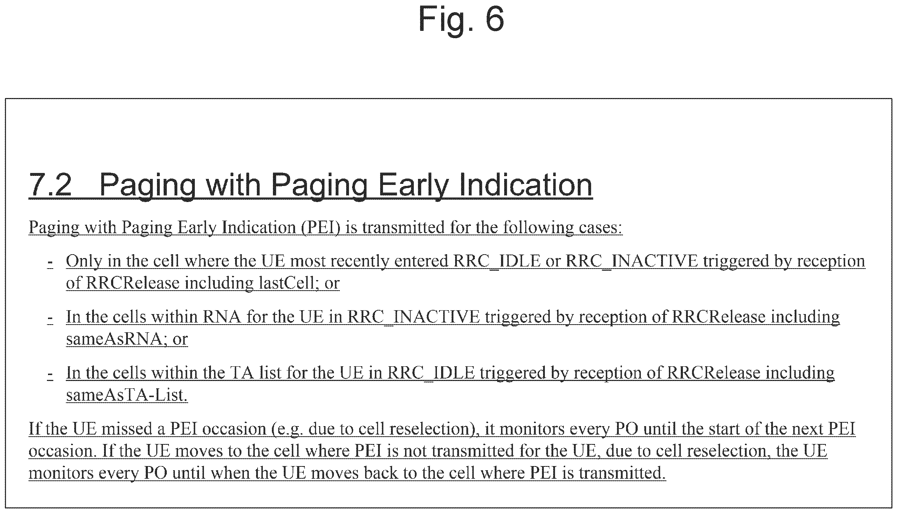

Fig. 6 is a diagram illustrating a specification change example (1) of the 3GPP specification (TS38.304). The following specification change examples are merely examples, and the specification change examples are not limited to those described below.

As shown in Fig. 6, the PEI information may be transmitted in any of (1) a cell (corresponding to the above-described transmission area pattern 1) in which the terminal 10 has transitioned to the idle state or the inactive state with the reception of the RRC release message including the parameter (lastCell) as a trigger, (2) a cell (corresponding to the above-described transmission area pattern 4) in the RNA related to the terminal 10 that has transitioned to the inactive state with the reception of the RRC release message including the parameter (sameAsRNA) as a trigger, and (3) a cell (corresponding to the above-described transmission area pattern 3) in the TAI list related to the terminal 10 that has transitioned to the idle state with the reception of the RRC release message including the parameter (sameAsTA-List) as a trigger.

In addition, when the terminal 10 cannot monitor the PEI-O due to, for example, cell reselection or the like (when the monitoring is not performed), the terminal 10 monitors all the POs until the next PEI-O starts. In addition, when the terminal 10 moves to a cell in which the PEI information is not transmitted due to cell reselection or the like, the terminal 10 monitors all the POs until the terminal 10 returns to the cell to which the PEI is transmitted.

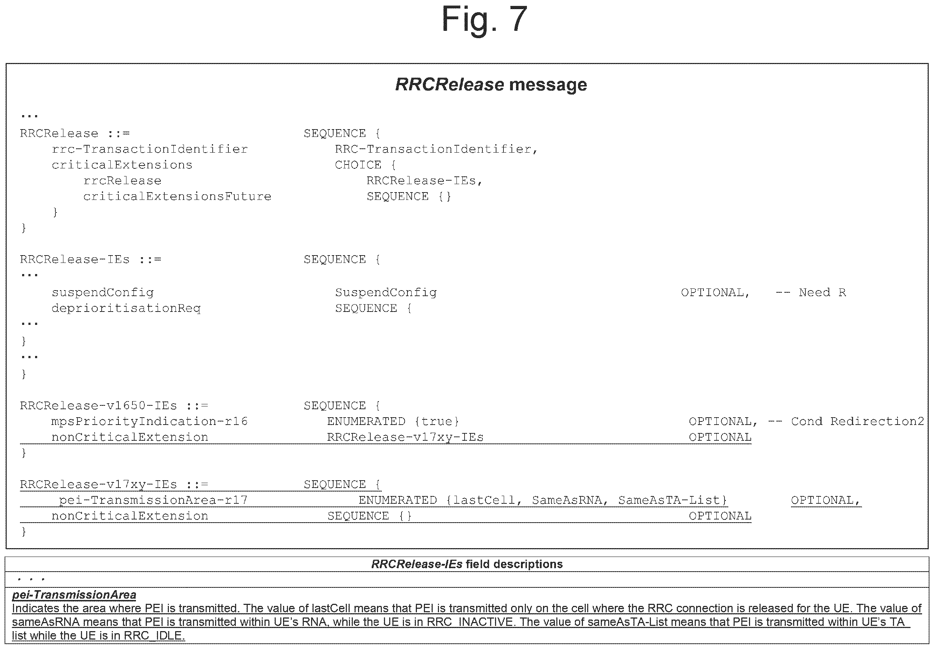

Fig. 7 is a diagram illustrating a specification change example (1) of the 3GPP specification (TS38.331). The underlined part of Fig. 7 is the specification change example according to the present embodiment. The following specification change examples are merely examples, and the specification change examples are not limited to those described below.

As shown in Fig. 7, the RRC release message includes the PEI transmission area information (for example, "pei-TransmissionArea-r17"), and any one of three types of parameters (lastCell, SameAsRNA, and SameAsTA-List) may be designated.

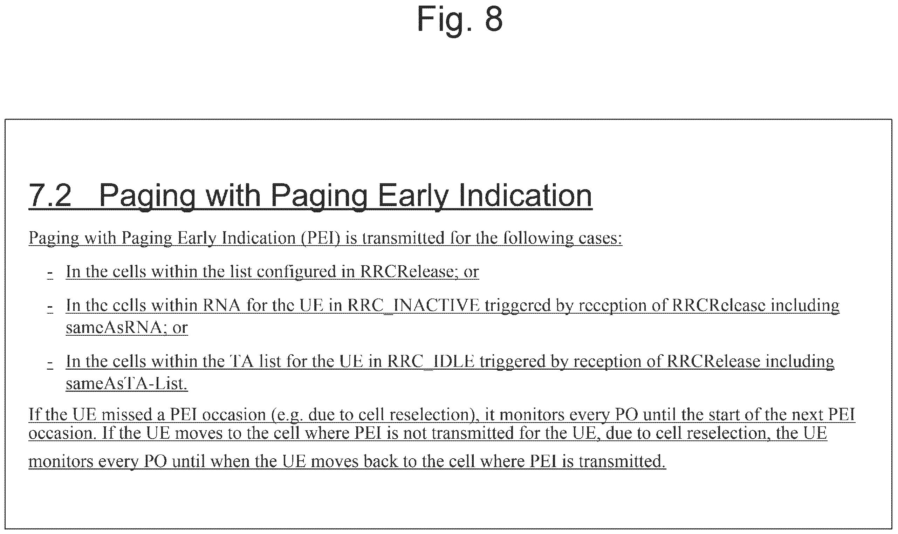

Fig. 8 is a diagram illustrating a specification change example (2) of the 3GPP specification (TS38.304) related to a paging processing according to the present embodiment. As shown in Fig. 8, the PEI information may be transmitted in any of (1) a cell (corresponding to the above-described transmission area pattern 2) in a list configured by the RRC release message, (2) a cell (corresponding to the above-described transmission area pattern 4) in the RNA related to the terminal 10 that has transitioned to the inactive state with the reception of the RRC release message including the parameter (sameAsRNA) as a trigger, and (3) a cell (corresponding to the above-described transmission area pattern 3) in the TAI list related to the terminal 10 that has transitioned to the idle state with the reception of the RRC release message including the parameter (sameAsTA-List) as a trigger. The other points not mentioned are the same as in Fig. 6.

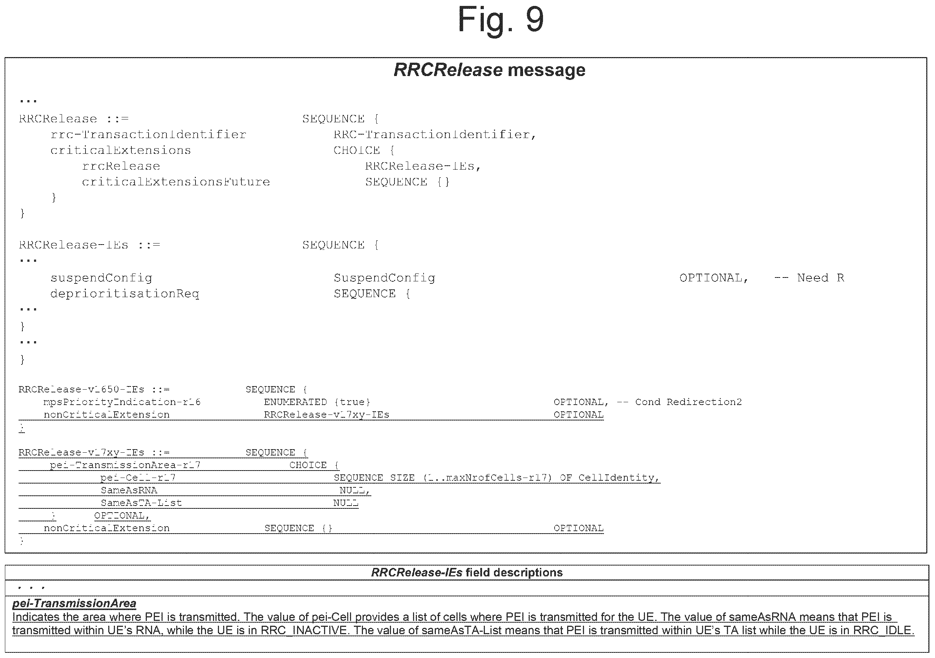

Fig. 9 is a diagram illustrating a specification change example (2) of the 3GPP specification (TS38.331). The underlined part of Fig. 9 is the specification change example according to the present embodiment. As shown in Fig. 9, the RRC release message includes the PEI transmission area information (for example, "pei-TransmissionArea-r17"), and any one of three types of parameters (pei-Cell-r17, SameAsRNA, and SameAsTA-List) may be designated. In addition, the pei-Cell-r17 may include a plurality of cell IDs (Cellidentity).

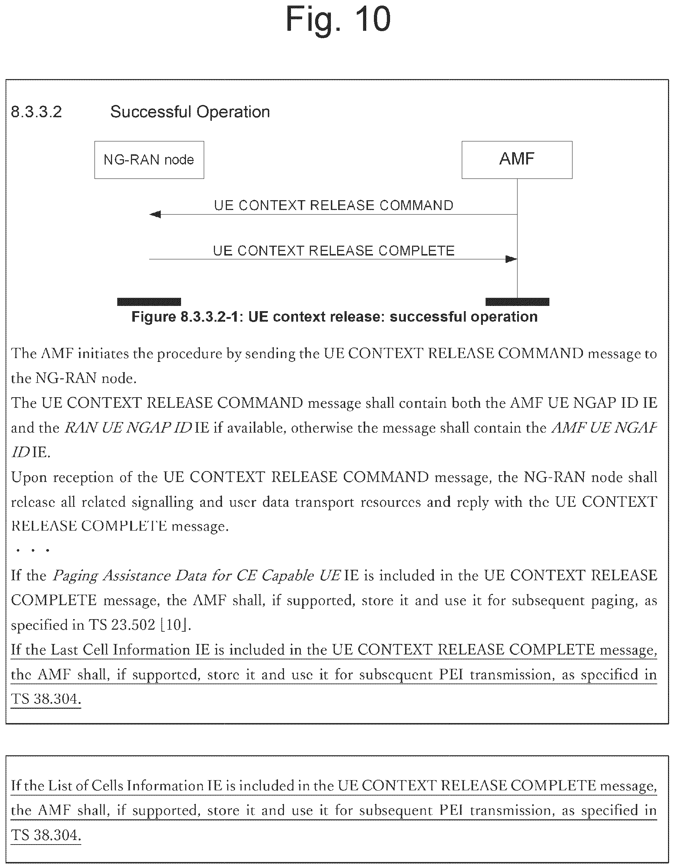

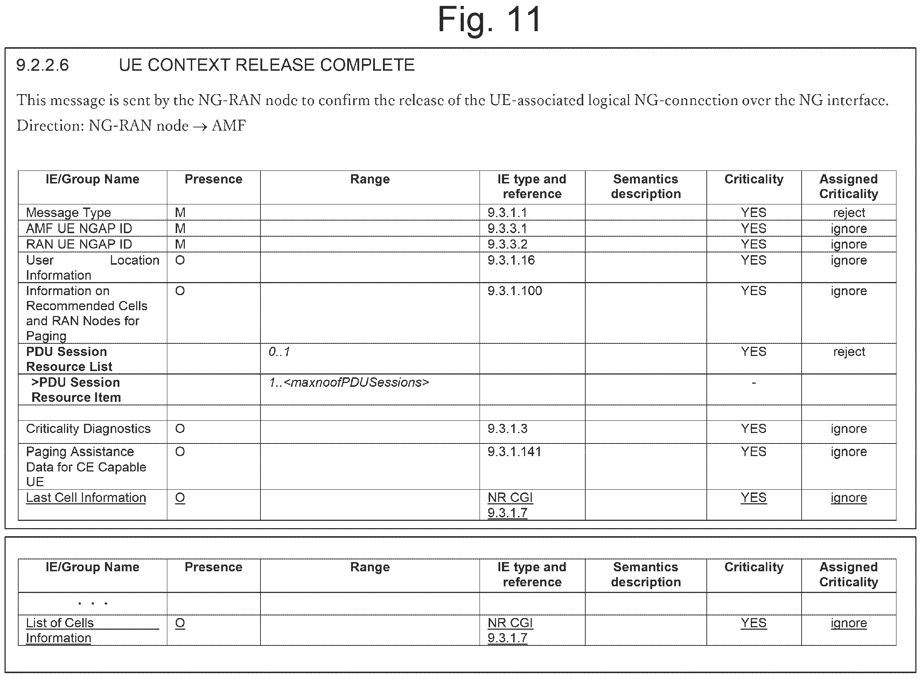

Figs. 10 and 11 are diagrams showing specification change examples of the 3GPP specification (TS38.413). As shown in the upper part of the underlined part of Fig. 10 and Fig. 11, when the AMF receives the UE CONTEXT RELEASE COMPLETE message including the information element (Last Cell Information), the AMF stores the information element (Last Cell Information) and uses the information element for the subsequent PEI transmission. The specification change example corresponds to a case where, in the processing procedure of step S102 of Fig. 4, the PEI transmission area information corresponding to the transmission area pattern 1 is transmitted from the base station 20 to the core network 30.

In addition, as shown in the lower part of the underlined part of Fig. 10 and Fig. 11, when the AMF receives the UE CONTEXT RELEASE COMPLETE message including the information element (List of Cells Information), the AMF stores the information element (List of Cells Information) and then uses the information element for the subsequent PEI transmission. The specification change example corresponds to a case where, in the processing procedure of step S102 of Fig. 4, the PEI transmission area information corresponding to the transmission area pattern 2 is transmitted from the base station 20 to the core network 30.

In the specification change example of Fig. 11, the information element (last cell information or list of cells information) according to the present embodiment may be included in the existing information element (Information on Recommended Cells and RAN Nodes for Paging) instead of adding the new information element (Last Cell Information or List Of Cells Information).

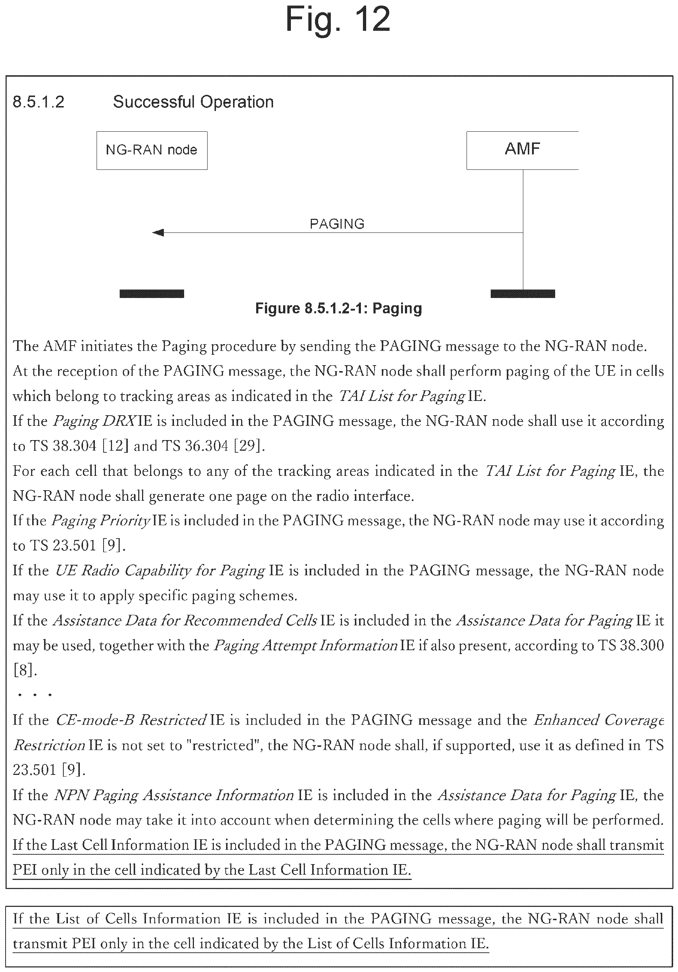

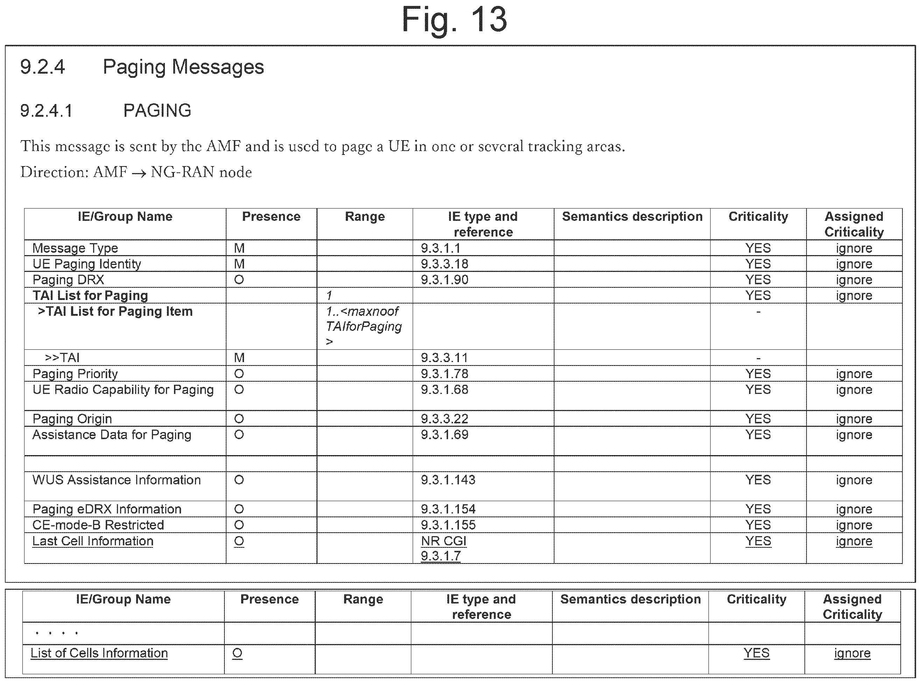

Figs. 12 and 13 are diagrams showing specification change examples of the 3GPP specification (TS38.413). As shown in the upper part of the underlined part of Fig. 12 and Fig. 13, when the base station 20 (NG-RAN) receives the paging message including the information element (Last Cell Information), the base station 20 transmits the PEI information only in the cell indicated by the information element (Last Cell Information). The specification change example corresponds to a case where, for example, in the processing procedure of step S110 in Fig. 4, the PEI transmission area information corresponding to the transmission area pattern 1 is transmitted from the core network 30 to the base station 20 and the base station 20 transmits the PEI information in the cell designated by the received PEI transmission area information.

In addition, as shown in the lower part of the underlined part of Fig. 12 and Fig. 13, when the base station 20 (NG-RAN) receives the paging message including the information element (list of cells information), the base station 20 transmits the PEI information only in the cell indicated by the information element (list of cells information). The specification change example corresponds to a case where, for example, in the processing procedure of step S110 in Fig. 4, the PEI transmission area information corresponding to the transmission area pattern 2 is transmitted from the core network 30 to the base station 20 and the base station 20 transmits the PEI information in the cell designated by the received PEI transmission area information.

In the specification change example of Fig. 13, the information element (Last Cell Information or List of Cells Information) according to the present embodiment may be included in the existing information element (Assistance Data for RAN Paging) instead of adding the new information element (Last Cell Information or List of Cells Information).

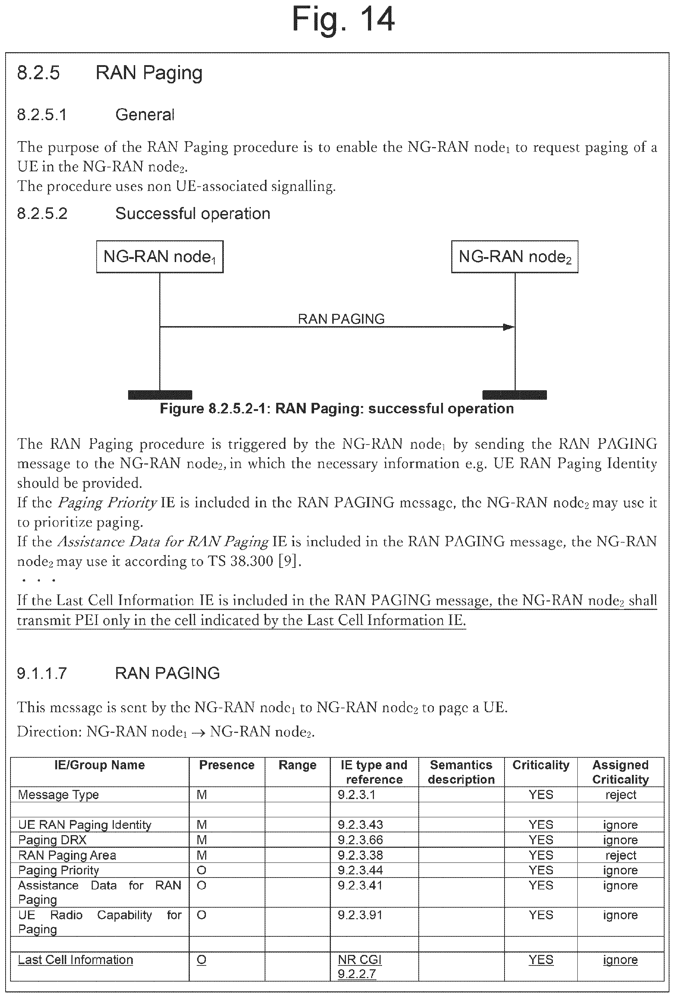

Fig. 14 is a diagram illustrating a specification change example of the 3GPP specification (TS38.423). As shown in the underlined part of Fig. 14, when the base station 20 (NG-RAN) receives the paging message including the information element (Last Cell Information), the base station 20 (NG-RAN) transmits the PEI information only in the cell indicated by the information element (Last Cell Information).

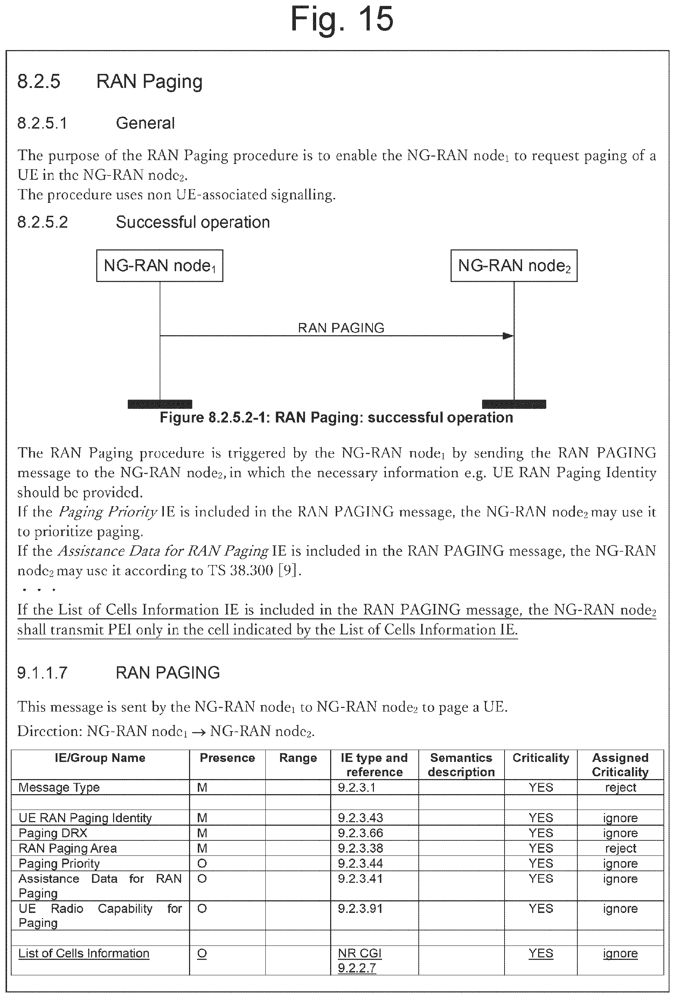

Fig. 15 is a diagram illustrating a specification change example of the 3GPP specification (TS38.423). As shown in the underlined part of Fig. 15, when the base station 20 (NG-RAN) receives the paging message including the information element (List of Cells Information), the base station 20 (NG-RAN) transmits the PEI information only in the cell indicated by the information element (List of Cells Information). The specification change example corresponds to a case where, for example, in the processing procedure of step S210 of Fig. 5, the PEI transmission area information corresponding to the transmission area pattern 2 is transmitted from the base station 20-1 to the base station 20-2, and the base station 20-2 transmits the PEI information in the cell designated by the received PEI transmission area information.

(Configuration of wireless communication system)

Next, a configuration of each apparatus of the wireless communication system 1 described above will be described. The following configuration illustrates a necessary configuration in describing the present embodiment and does not exclude each apparatus including a functional block other than the illustrated functional blocks.

<Hardware configuration>

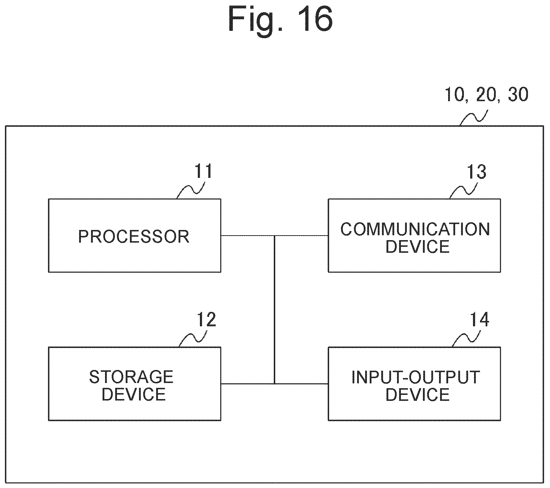

Fig. 16 is a diagram illustrating an example of the hardware configuration of each apparatus in the wireless communication system according to the present embodiment. Each apparatus (for example, the terminal 10, the base station 20, and the core network 30) in the wireless communication system 1 includes a processor 11, a storage device 12, a communication device 13 that performs wired or wireless communication, and an input device that receives various input operations or an input-output device 14 that outputs various types of information.

The processor 11 is, for example, a central processing unit (CPU) and controls each apparatus in the wireless communication system 1. The processor 11 may perform various types of processing described in the present embodiment by reading out a program from the storage device 12 and performing the program. Each apparatus in the wireless communication system 1 may be configured with one or more processors 11. In addition, each apparatus may be called a computer.

The storage device 12, for example, is configured with a storage such as a memory, a hard disk drive (HDD), and/or a solid state drive (SSD). The storage device 12 may store various types of information (for example, the program performed by the processor 11) necessary for performing the processing via the processor 11.

The communication device 13 is a device that performs communication through a wired and/or wireless network and may include, for example, a network card, a communication module, a chip, or an antenna. In addition, the communication device 13 may include a radio frequency (RF) device that performs processing related to an amplifier and to a radio signal and a baseband (BB) device that performs baseband signal processing.

The RF device generates a radio signal to be transmitted from the antenna by performing, for example, D/A conversion, modulation, frequency conversion, and power amplification with respect to a digital baseband signal received from the BB device. In addition, the RF device generates a digital baseband signal by performing frequency conversion, demodulation, A/D conversion, and the like with respect to a radio signal received from the antenna and transmits the digital baseband signal to the BB device.

The BB device performs processing of converting data into a digital baseband signal.

Specifically, the BB device may generate an OFDM symbol by mapping the data to a subcarrier and performing an IFFT and generate the digital baseband signal by inserting a CP into the generated OFDM symbol. The BB device may apply a transform precoder (DFT spreading) before mapping the data to the subcarrier.

In addition, the BB device performs processing of converting a digital baseband signal into data. Specifically, the BB device may remove the CP from the digital baseband signal input from the RF device and extract a signal of the frequency domain by performing an FFT with respect to the signal in which the CP is removed. The BB device may apply an IDFT to the signal of the frequency domain.

The input-output device 14, for example, includes an input device such as a keyboard, a touch panel, a mouse, and/or a microphone and, for example, includes an output device such as a display and/or a speaker.

The hardware configuration described above is merely an example. In each apparatus in the wireless communication system 1, part of the hardware illustrated in Fig. 16 may be omitted, or any other hardware unillustrated in Fig. 16 may be included. Further, the hardware illustrated in Fig. 16 may be constituted by one or more chips.

<Functional block configuration>

«Terminal»

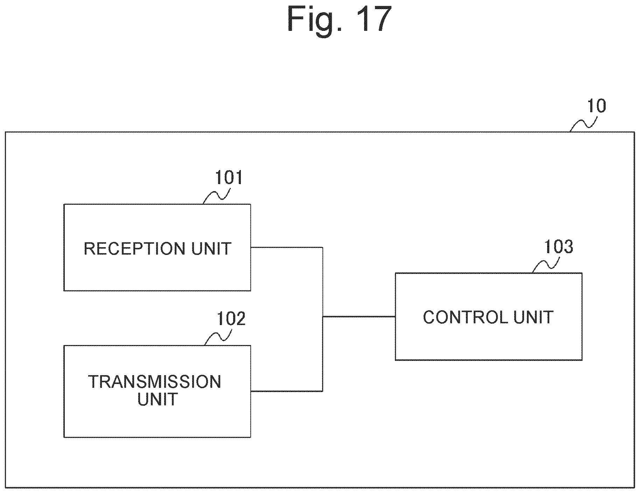

Fig. 17 is a diagram illustrating an example of the functional configuration of the terminal according to the present embodiment. As illustrated in Fig. 17, the terminal 10 includes a reception unit 101, a transmission unit 102, and a control unit 103. The functional configuration illustrated in Fig. 17 is merely an example, and the functional distinction and functional unit may have any names as long as the operations according to the present embodiment can be performed. In addition, the reception unit 101 and the transmission unit 102 may be collectively referred to as a communication unit.

All or a part of the functions realized by the reception unit 101 and by the transmission unit 102 can be realized using the communication device 13. In addition, all or a part of the functions realized by the reception unit 101 and by the transmission unit 102 and the control unit 103 can be realized by performing the program stored in the storage device 12 via the processor 11. In addition, it is possible to store the program in a storage medium. The storage medium in which the program is stored may be a non-transitory computer readable medium. The non-transitory storage medium is not particularly limited and, for example, may be a storage medium such as a USB memory or a CD-ROM.

The reception unit 101 receives a signal (for example, the DL signal and/or a sidelink signal). In addition, the reception unit 101 may receive information and/or data transmitted through the signal. Here, the term "receive", for example, may include performing processing related to reception such as at least one of reception of a radio signal, demapping, demodulation, decoding, monitoring, or measurement. The DL signal may include at least one of, for example, the PDSCH, the PDCCH, a downlink reference signal, the synchronization signal, or the PBCH.

The reception unit 101 detects the DCI by monitoring the PDCCH candidates in the search space. The reception unit 101 may receive DL data through the PDSCH scheduled using the DCI. The DL data may include downlink user data and/or control information of a higher layer (for example, parameters of at least one of the MAC layer, an RRC layer, and the Non Access Stratum (NAS) layer). The reception unit 101 may receive the system information through the PBCH and/or the PDSCH.

The transmission unit 102 transmits a signal (for example, the UL signal and/or the sidelink signal). In addition, the transmission unit 102 may transmit information and/or data transmitted through the signal. Here, the term "transmit", for example, may include performing processing related to transmission such as at least one of encoding, modulation, mapping, or transmission of a radio signal. The UL signal may include at least one of, for example, the PUSCH, the PRACH, the PUCCH, or an uplink reference signal.

The transmission unit 102 may transmit UL data through the PUSCH scheduled using the DCI received by the reception unit 101. Uplink user data and/or control information of a higher layer (for example, parameters of at least one of the MAC layer, the RRC layer, or the NAS layer) may be transmitted in the UL data.

The control unit 103 performs various controls in the terminal 10. Specifically, the control unit 103 may control the operation of the terminal 10 based on information (for example, the parameters of the RRC layer) related to various types of configuration received by the reception unit 101 from the base station 20 or from other terminals 10. Operating the terminal 10 based on the information may be synonymous with "configuring the configuration information in the terminal 10".

The control unit 103 may control reception of the signal in the reception unit 101. In addition, the control unit 103 may control transmission of the signal in the transmission unit 102. The control unit 103 may determine whether to apply the transform precoder to the signal transmitted by the transmission unit 102.

In the present embodiment, the terminal 10 may include a reception unit that receives an RRC message (for example, an RRC release message) including second information (for example, PEI transmission area information) related to a cell to which first information (for example, PEI information) related to paging in one or more paging occasions is transmitted, and a control unit that controls monitoring of first downlink control information (for example, PEI DCI) including the first information when the terminal 10 is in an idle state or an inactive state and a serving cell is included in a cell indicated by the second information, and controls monitoring of second downlink control information (for example, paging DCI) including information related to scheduling of a downlink shared channel for transmitting a paging message in the paging occasions based on the first information and/or information related to a short message.

The control unit 103 may monitor the second downlink control information without monitoring the first downlink control information when the terminal 10 is in the idle state or the inactive state and the serving cell is not included in the cell indicated by the second information.

Any one of a cell in which the RRC connection is released, a cell in a RAN Notification Area (RNA), or a cell in a Tracking Area List (TAI list) may be configured for the second information.

Any one of a cell list configured by the RRC message, a cell in the RAN notification area, or a cell in the tracking area list may be configured for the second information.

When the first downlink control information cannot be monitored (when the monitoring is not performed) in the first reception occasion (PEI-O) in which the monitoring of the first downlink control information is performed, the control unit 103 may monitor the second downlink control information in a second reception occasion (PO) in which the monitoring of the second downlink control information is performed until a next first reception occasion of the first reception occasion. When the terminal 10 is in a connected state and the serving cell is included in the cell indicated by the second information, the control unit 103 may monitor the second downlink control information without monitoring the first downlink control information.

«Base station»

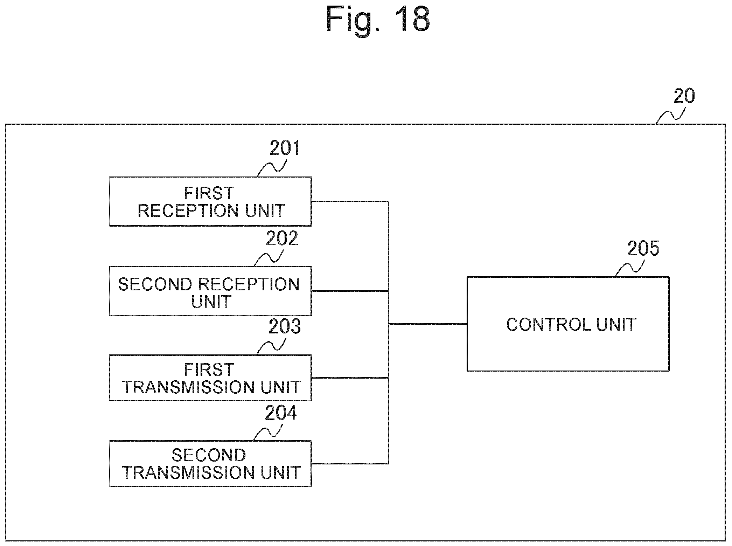

Fig. 18 is a diagram illustrating an example of the functional block configuration of the base station according to the present embodiment. As shown in Fig. 18, the base station 20 includes a first reception unit 201, a second reception unit 202, a first transmission unit 203, a second transmission unit 204, and a control unit 205. The functional configuration illustrated in Fig. 18 is merely an example, and the functional distinction and functional unit may have any names as long as the operations according to the present embodiment can be performed. In addition, the first reception unit 201 and the second reception unit 202 may be collectively referred to as a reception unit. In addition, the first transmission unit 203 and the second transmission unit 204 may be collectively referred to as a transmission unit. In addition, the first reception unit 201, the second reception unit 202, the first transmission unit 203, and the second transmission unit 204 may be collectively referred to as a communication unit.

All or a part of the functions realized by the first reception unit 201, the second reception unit 202, the first transmission unit 203, and the second transmission unit 204 can be realized by using the communication device 13. For example, the first reception unit 201 and the first transmission unit 203 may be realized by using the communication device 13 related to the wireless network, and the second reception unit 202 and the second transmission unit 204 may be realized by using the communication device 13 related to the wired network. In addition, all or a part of the functions realized by the first reception unit 201 and by the second reception unit 202, the first transmission unit 203, and the second transmission unit 204, and the control unit 205 can be realized by performing the program stored in the storage device 12 via the processor 11. In addition, it is possible to store the program in a storage medium. The storage medium in which the program is stored may be a non-transitory computer readable medium. The non-transitory storage medium is not particularly limited and, for example, may be a storage medium such as a USB memory or a CD-ROM.

The first reception unit 201 receives a signal (for example, an UL signal and/or a sidelink signal). In addition, the first reception unit 201 may receive information and/or data (for example, the UL data) transmitted through the signal.

The second reception unit 202 receives a signal (for example, a C-plane signal and a U-plane signal) from another base station 20 or the core network 30.

The first transmission unit 203 transmits a signal (for example, the DL signal and/or the sidelink signal). In addition, the first transmission unit 203 may transmit information and/or data (for example, the DL data) transmitted through the signal.

The second transmission unit 204 transmits the signal (for example, the C-plane signal and the U-plane signal) to the other base station 20 or the core network 30.

The control unit 205 performs various types of control for communication with the terminal 10, the other base station 20, and the core network 30. Specifically, the control unit 205 may determine information related to various types of configuration informed to the terminal 10. Transmitting the information to the terminal 10 may be synonymous with "configuring the information in the terminal".

The control unit 205 may control the reception of the signals in the first reception unit 201 and the second reception unit 202. In addition, the control unit 205 may control the transmission of the signal in the first transmission unit 203 and the second transmission unit 204.

In the present embodiment, the base station 20 may include a first transmission unit 203 that transmits the RRC message indicating to transition to the idle state to the terminal 10, the RRC message including second information (for example, PEI transmission area information) related to the cell (area) to which the first information (for example, PEI information) related to the paging in one or more paging occasions is transmitted, and a second transmission unit 204 that transmits a message including third information (for example, PEI transmission area information) related to the cell to which the first information is transmitted to the core network 30 after transmitting the RRC message indicating to transition to the idle state.

In addition, the base station 20 may include the second reception unit 202 (reception unit) that receives a paging message from the core network, the paging message including fourth information (for example, PEI transmission area information) related to a cell to which the first information is transmitted, and the first transmission unit 203 may transmit downlink control information (for example, a paging DCI) including information related to scheduling of a downlink shared channel for transmitting the paging message in the paging occasions and/or information related to a short message after the first information is transmitted when transmitting the paging message in the cell indicated by the fourth information.

The first transmission unit 203 may transmit the RRC message indicating to transition to the inactive state, the RRC message including the second information (PEI transmission area information), to the terminal 10, and the second transmission unit 204 may transmit a message including fifth information (for example, PEI transmission area information)

related to the cell to which the first information is transmitted to the other base station 20 after transmitting the RRC message indicating to transition to the inactive state.

In addition, the control unit 205 may determine (select) the second information based on the attribute of the terminal 10. The attribute of the terminal 10 may be, for example, information related to a movement amount of the terminal 10.

In the present embodiment, the base station 20 (first base station) may include the second reception unit 202 (reception unit) that receives a paging message from another base station 20 (a neighbour adjacent base station or a second base station), the paging message including fifth information (for example, PEI transmission area information) related to a cell (area) to which the first information (for example, PEI information) related to paging in one or more paging occasions is transmitted; and the first transmission unit 203 that transmits downlink control information (for example, paging DCI) including information related to scheduling of a downlink shared channel for transmitting the paging message in the paging occasions and/or information related to a short message after transmitting the first information when transmitting the paging message in the cell indicated by the fifth information.

«Core network»

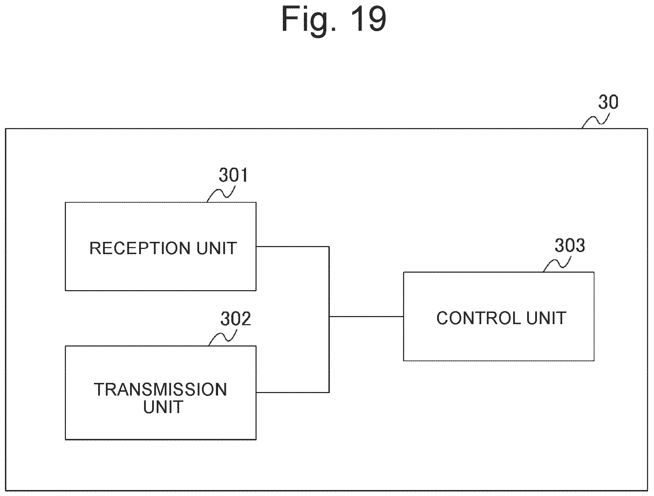

Fig. 19 is a diagram illustrating an example of a functional configuration of the core network 30 according to the present embodiment. As shown in Fig. 19, the core network 30 includes a reception unit 301, a transmission unit 302, and a control unit 303. The functional configuration illustrated in Fig. 19 is merely an example. Any functional distinction and any names of functional units with which the operation according to the present embodiment can be performed may be used. In addition, the reception unit 301 and the transmission unit 302 may be collectively referred to as a communication unit.

All or a part of the functions realized by the reception unit 301 and by the transmission unit 302 can be realized by using the communication device 13. In addition, all or a part of the functions realized by the reception unit 301 and by the transmission unit 302 and the control unit 303 can be realized by performing the program stored in the storage device 12 via the processor 11. In addition, it is possible to store the program in a storage medium. The storage medium in which the program is stored may be a non-transitory computer readable medium. The non-transitory storage medium is not particularly limited and, for example, may be a storage medium such as a USB memory or a CD-ROM.

The reception unit 301 receives a signal (for example, a NAS message, a C-plane signal, and a U-plane signal) from the terminal 10, the base station 20, or another core network apparatus.

The transmission unit 302 transmits the signal (for example, the NAS message, the C-plane signal, and the U-plane signal) to the terminal 10, the base station 20, or another core network apparatus.

The control unit 303 performs various types of control in the core network 30. In addition, the control unit 303 may control the operation of the terminal 10 by using information related to various types of configuration (for example, parameters of the NAS message). In addition, the control unit 303 may control the operation of the base station 20 by using a message of the NG application protocol.

The control unit 303 may control reception of the signal in the reception unit 301. In addition, the control unit 303 may control transmission of the signal in the transmission unit 302.

In the present embodiment, the core network 30 includes a reception unit 301 that receives a message including third information (for example, PEI transmission area information) about a cell to which first information (for example, PEI information) related to paging in one or more paging occasions is transmitted from the base station 20, and a transmission unit 302 that transmits a message including fourth information (for example, PEI transmission area information) about the cell to which the first information is transmitted, based on the third information, to the base station 20 corresponding to the cell to which the first information is transmitted when the paging for the terminal 10 is triggered, among the one or more base stations 20 that perform the paging, and transmits a message not including the fourth information to the base station 20 corresponding to the cell in which the first information is not transmitted, among the one or more base stations 20 that perform the paging.

In addition, the control unit 303 may determine (select) fourth information to be configured in the terminal 10 based on the attribute of the terminal 10 instead of the third information. The attribute of the terminal 10 may be, for example, information related to a movement amount of the terminal 10. In addition, when the paging is triggered for the terminal 10, the transmission unit 302 may transmit the message including the fourth information determined (selected) based on the information related to the movement amount of the terminal 10 to the base station 20 corresponding to the cell to which the first information is transmitted among the one or more base stations 20 that perform the paging, and may transmit the message which does not include the fourth information to the base station 20 corresponding to the cell to which the first information is not transmitted among the one or more base stations 20 that perform the paging.

(Supplement)

The PEI in the embodiment may be referred to as a paging subgroup indicator.

Various signals, information, and parameters in the embodiment may be signaled in any layer. That is, the various signals, information, and parameters may be replaced with signals, information, and parameters of any layer such as a higher layer (for example, the NAS layer, the RRC layer, and the MAC layer) and a lower layer (for example, the physical layer). In addition, the notification of given information is not limited to explicit notification and may be implicitly performed (for example, by not providing the information or using other types of information).

In addition, names of various signals, information, parameters, IEs, channels, time units, and frequency units in the embodiment are merely an example and may be replaced with other names. For example, a slot may have any name of a time unit having a given number of symbols. In addition, an RB may have any name of a frequency unit having a given number of subcarriers. In addition, the terms "first" and "second" are simply for identifying a plurality of pieces of information or signals and may be reversed in order, as appropriate.

For example, in the embodiment, each of the PDSCH, the PUSCH, the PDCCH, the PBCH, the PRACH, and the like has been illustrated in the present embodiment as examples of a physical channel for transmitting the DL data, a physical channel for transmitting the UL data, a physical channel for transmitting the DCI, a physical channel for transmitting broadcast information, and a physical channel for transmitting the RA preamble. However, the physical channels are not limited to the illustrated names as long as the physical channels have the same functions. In addition, these physical channels may be replaced with transport channels to which the physical channels are mapped. In addition, each of the PDSCH, the PUSCH, the PDCCH, the PBCH, the PRACH, and the like may be replaced with a transport channel (for example, at least one of a downlink shared channel (DL-SCH), an uplink shared channel (UL-SCH), a broadcast channel (BCH), or a random access channel (RCH)) and the like mapped to a physical channel. In addition, these transport channels may be replaced with logical channels to which the transport channels are mapped. In addition, the DL data and the UL data may be downlink data and uplink data, respectively, and the data may include user data and control information of a higher layer (for example, the RRC parameters and the medium access control (MAC) parameters).

In addition, the terminal 10 in the embodiment is not limited to the illustrated purposes (for example, RedCap and IoT) and may be used for any purposes (for example, eMBB, URLLC, device-to-device (D2D), and vehicle-to-everything (V2X)) as long as the terminal 10 has the same functions. In addition, forms of various types of information are not limited to the embodiment and may be changed to a bit representation (0 or 1), a truth value (Boolean; true or false), an integer value, a text, and the like, as appropriate. In addition, singular forms and plural forms in the embodiment may be changed from each other.

The embodiment described above is for easy understanding of the present disclosure and is not to be interpreted as limiting the present disclosure. The flowcharts, sequences, each element in the embodiment and positioning of the elements, indexes, conditions, and the like described in the embodiment are not limited to the illustration and can be changed, as appropriate. In addition, at least a part of the configurations described in the embodiment can be partially replaced or combined with each other.

<Addenda>

The present embodiment can be expressed as follows.

<Addendum 1>

A terminal including

a reception unit configured to receive an RRC message including second information related to a cell to which first information related to paging in one or more paging occasions is transmitted; and
a control unit configured to control monitoring of first downlink control information including the first information in a case of an idle state or an inactive state and when a serving cell is included in a cell indicated by the second information, and configured to control monitoring of second downlink control information including information related to scheduling of downlink shared channel for transmitting a paging message in the paging occasions and/or information related to a short message based on the first information.

<Addendum 2>

In the terminal according to Addendum 1, in the case of the idle state or the inactive state and when the serving cell is not included in a cell indicated by the second information, the control unit is configured to monitor second downlink control information without monitoring the first downlink control information.

<Addendum 3>

In the terminal according to Addendum 1 or 2, any one of a cell in which an RRC connection is released, a cell in the RAN notification area, or a cell in the tracking area list is configured for the second information.

<Addendum 4>

In the terminal according to Addendum 1 or 2, any one of a cell list configured by the RRC message, a cell in the RAN notification area, or a cell in the tracking area is configured for the second information.

<Addendum 5>

In the terminal according to any one of Addenda 1 to 4, when it is not possible to monitor the first downlink control information in the first reception occasion in which the monitoring of the first downlink control information is performed, the control unit is configured to monitor the second downlink control information in a second reception occasion in which the monitoring of the second downlink control information is performed until a next first reception occasion of the first reception occasion.

<Addendum 6>

In the terminal according to any one of Addenda 1 to 5, when the terminal is in a connected state and the serving cell is included in the cell indicated by the second information, the control unit is configured to monitor the second downlink control information without monitoring the first downlink control information.

<Addendum 7>

A base station including

a first transmission unit configured to transmit an RRC message to the terminal, the RRC message including second information related to a cell to which first information related to paging in one or more paging occasions is transmitted and indicating to transition to an idle state; and
a second transmission unit configured to transmit a message to a core network, the message including third information related to the cell to which the first information is transmitted, after transmitting the RRC message indicating to transition to the idle state.

<Addendum 8>

The base station according to Addendum 7 further including

a reception unit configured to receive a paging message from the core network, the paging message including fourth information related to the cell to which the first information is transmitted, in which
the first transmission unit is configured to transmit downlink control information including information related to scheduling of a downlink shared channel for transmitting the paging message in the paging occasions and/or information related to a short message after transmitting the first information when the paging message is transmitted in a cell indicated by the fourth information.

<Addendum 9>

In the base station according to Addendum 7 or 8,

the first transmission unit is configured to transmit the RRC message including the second information and indicating to transition to an inactive state to the terminal, and
the second transmission unit is configured to transmit a message including fifth information related to the cell to which the first information is transmitted to another base station after transmitting the RRC message indicating to transition to the inactive state.

<Addendum 10>

The base station according to any one of Addenda 7 to 9, further including
a control unit configured to determine the second information based on an attribute of the terminal.

<Addendum 11>

A base station including

a reception unit configured to receive a paging message from another base station, the paging message including fifth information related to a cell to which first information related to paging in one or more paging occasions is transmitted; and
a transmission unit configured to transmit downlink control information including information related to scheduling of a downlink shared channel for transmitting the paging message in the paging occasions and/or information related to a short message after transmitting the first information when the paging message is transmitted in the cell indicated by the fifth information.

<Addendum 12>

A core network apparatus including

a reception unit configured to receive a message from a base station, the message including third information related to a cell to which first information related to paging in one or more paging occasions is transmitted; and
a transmission unit configured to transmit a message including fourth information related to the cell to which the first information is transmitted to a base station corresponding to the cell to which the first information is transmitted among one or more base stations that perform paging based on the third information when the paging for a terminal is triggered, and configured to transmit a message which does not include the fourth information to a base station corresponding to a cell to which the first information is not transmitted among the one or more base stations.

<Addendum 13>

A communication method in a terminal, the method including

a step of receiving an RRC message including second information related to a cell to which first information related to paging in one or more paging occasions is transmitted; and
a step of controlling monitoring of first downlink control information including the first information in a case of an idle state or an inactive state and when a serving cell is included in a cell indicated by the second information, and controlling monitoring of second downlink control information including information related to scheduling of downlink shared channel for transmitting a paging message in the paging occasions and/or information related to a short message based on the first information.

<Addendum 14>

A communication method in a base station, the method including

a step of transmitting an RRC message to a terminal, the RRC message including second information related to a cell to which first information related to paging in one or more paging occasions is transmitted and indicating to transition to an idle state; and
a step of transmitting a message to core network, the message including third information related to the cell to which the first information is transmitted after transmitting the RRC message indicating to transition to the idle state.

<Appendix 15>

A communication method in a base station, the method including

a step of receiving a paging message from another base station, the paging message including fifth information related to a cell to which first information related to paging in one or more paging occasions is transmitted; and
a step of transmitting downlink control information including information related to scheduling of a downlink shared channel for transmitting the paging message in the paging occasions and/or information related to a short message after transmitting the first information when the paging message is transmitted in the cell indicated by the fifth information.

<Addendum 16>

A communication method in a core network apparatus, the method including

a step of receiving a message from a base station, the message including third information related to a cell to which first information related to paging in one or more paging occasions is transmitted; and
a step of transmitting a message including fourth information related to the cell to which the first information is transmitted to a base station corresponding to the cell to which the first information is transmitted among one or more base stations that perform the paging based on the third information when the paging for a terminal is triggered, and transmitting a message which does not include the fourth information to a base station corresponding to a cell to which the first information is not transmitted among the one or more base stations.

**Claims**

1.  A terminal comprising:

    a reception unit configured to receive system information including second information related to a cell to which first information related to a subgroup in one or more paging occasions is transmitted; and
    a control unit configured to control monitoring of a PDCCH for first downlink control information including the first information based on the second information in a case of an idle state or an inactive state, wherein
    the control unit is configured to

    monitor the PDCCH for the first downlink control information including the first information in a cell in which an RRC release message is received when the second information is configured for a last cell indicating the cell in which the RRC release message is received, and
    monitor the PDCCH for the first downlink control information including the first information in a serving cell when the second information is not configured.

2.  The terminal according to claim 1, wherein
    the control unit is configured to control monitoring of second downlink control information including information related to scheduling of a downlink shared channel for transmitting a paging message in the paging occasions and/or information related to a short message based on the first information.

3.  The terminal according to claim 1 or 2, wherein
    in the case of the idle state or the inactive state and when the serving cell is not included in a cell indicated by the second information, the control unit is configured to monitor second downlink control information including information related to scheduling of a downlink shared channel for transmitting a paging message in the paging occasions and/or information related to a short message without monitoring the first downlink control information.

4.  The terminal according to any one of claims 1 to 3, wherein
    when it is not possible to perform monitoring of the first downlink control information in a first reception occasion in which the monitoring of the first downlink control information is performed, the control unit is configured to monitor second downlink control information in a second reception occasion in which monitoring of the second downlink control information is performed, the second downlink control information including information related to scheduling of a downlink shared channel for transmitting a paging message in the paging occasions and/or information related to a short message.

5.  A base station comprising:

    a first transmission unit configured to transmit system information including second information related to a cell to which first information related to a subgroup in one or more paging occasions is transmitted to a terminal; and
    a second transmission unit configured to transmit a message including third information related to the cell to which the first information is transmitted to a core network.

**6.** A communication method in a terminal, the method comprising:

a step of receiving system information including second information related to a cell to which first information related to a subgroup in one or more paging occasions is transmitted; and
a step of controlling monitoring of a PDCCH for first downlink control information including the first information based on the second information in a case of an idle state or an inactive state, wherein
the step of controlling includes

monitoring the PDCCH for the first downlink control information including the first information in a cell in which an RRC release message is received when the second information is configured for a last cell indicating the cell in which the RRC release message is received, and
monitoring the PDCCH for the first downlink control information including the first information in a serving cell when the second information is not configured.

**7.** A communication method in a base station, the method comprising:

a step of transmitting system information including second information related to a cell to which first information related to a subgroup in one or more paging occasions is transmitted to a terminal; and
a step of transmitting a message including third information related to the cell to which the first information is transmitted to a core network.

**8.** A base station that communicates with a terminal, the base station comprising:

a transmission unit configured to, in a case of second information related to a cell to which first information related to a subgroup in one or more paging occasions is transmitted and when the terminal is in an idle state or an inactive state, transmit system information including the second information used to control monitoring of a PDCCH for first downlink control information including the first information, wherein
the transmission unit is configured to

control the terminal to monitor the PDCCH for the first downlink control information including the first information in a cell in which an RRC release message is received, by transmitting the system information in which the second information is configured for a last cell indicating the cell in which the RRC release message is received, and
control the terminal to monitor the PDCCH for the first downlink control information including the first information in a serving cell by transmitting the system information which does not include the second information.

**9.** A communication method in a base station that communicates with a terminal, the communication method comprising:

a step of, in a case of second information related to a cell to which first information related to a subgroup in one or more paging occasions is transmitted and when the terminal is in an idle state or an inactive state, transmitting system information including the second information used to control monitoring of a PDCCH for first downlink control information including the first information, wherein
the step of transmitting includes

controlling the terminal to monitor the PDCCH for the first downlink control information including the first information in a cell in which an RRC release message is received, by transmitting the system information in which the second information is configured for a last cell indicating the cell in which the RRC release message is received, and
controlling the terminal to monitor the PDCCH for the first downlink control information including the first information in a serving cell by transmitting the system information which does not include the second information.

# Fig. 1

EP 4 462 901 A1

# Fig. 2

DRX PERIODICITY T

RF

#0 #1 #2 #3 #4 #5 #6 #7 #8 #9 #10 #11 #12 #13 #14 #15 #16 #17 #18 #19 #20 #21 #22 #23 #24 #25 #26 #27 #28 #29 #30 #31

SUBFRAME

PO = SET OF S * X PDCCH MONITORING OCCASIONS    PF

EP 4 462 901 A1

# Fig. 3

MONITORING

NOT
MONITORING   MONITORING

PEI-O

PO#0

PO#1

TIME OFFSET

REFERENCE TIME

PF

PEI SEARCH SPACE

PAGING SEARCH SPACE

PEI DCI

PAGING DCI

EP 4 462 901 A1

# Fig. 4

EP 4 462 901 A1

# Fig. 5

EP 4 462 901 A1

# Fig. 6

## 7.2 Paging with Paging Early Indication

Paging with Paging Early Indication (PEI) is transmitted for the following cases:

- Only in the cell where the UE most recently entered RRC_IDLE or RRC_INACTIVE triggered by reception of RRCRelease including lastCell; or

- In the cells within RNA for the UE in RRC_INACTIVE triggered by reception of RRCRelease including sameAsRNA; or

- In the cells within the TA list for the UE in RRC_IDLE triggered by reception of RRCRelease including sameAsTA-List.

If the UE missed a PEI occasion (e.g. due to cell reselection), it monitors every PO until the start of the next PEI occasion. If the UE moves to the cell where PEI is not transmitted for the UE, due to cell reselection, the UE monitors every PO until when the UE moves back to the cell where PEI is transmitted.

# Fig. 7

| RRCRelease message |
| --- |

```
...
RRCRelease ::=                       SEQUENCE {
    rrc-TransactionIdentifier            RRC-TransactionIdentifier,
    criticalExtensions                   CHOICE {
        rrcRelease                           RRCRelease-IEs,
        criticalExtensionsFuture             SEQUENCE {}
    }
}

RRCRelease-IEs ::=                   SEQUENCE {
...
    suspendConfig                        SuspendConfig                               OPTIONAL,   -- Need R
    deprioritisationReq                  SEQUENCE {
...
}
...
}

RRCRelease-v1650-IEs ::=             SEQUENCE {
    mpsPriorityIndication-r16            ENUMERATED {true}                           OPTIONAL, -- Cond Redirection2
    nonCriticalExtension                RRCRelease-v17xy-IEs                        OPTIONAL
}

RRCRelease-v17xy-IEs ::=             SEQUENCE {
    pei-TransmissionArea-r17                ENUMERATED {lastCell, SameAsRNA, SameAsTA-List}      OPTIONAL,
    nonCriticalExtension                SEQUENCE {}                                 OPTIONAL
}
```

| RRCRelease-IEs field descriptions |
| --- |
| . . . |
| **pei-TransmissionArea**<br>Indicates the area where PEI is transmitted. The value of lastCell means that PEI is transmitted only on the cell where the RRC connection is released for the UE. The value of sameAsRNA means that PEI is transmitted within UE's RNA, while the UE is in RRC_INACTIVE. The value of sameAsTA-List means that PEI is transmitted within UE's TA list while the UE is in RRC_IDLE. |

# Fig. 8

EP 4 462 901 A1

## 7.2 Paging with Paging Early Indication

Paging with Paging Early Indication (PEI) is transmitted for the following cases:

- In the cells within the list configured in RRCRelease; or

- In the cells within RNA for the UE in RRC_INACTIVE triggered by reception of RRCRelease including sameAsRNA; or

- In the cells within the TA list for the UE in RRC_IDLE triggered by reception of RRCRelease including sameAsTA-List.

If the UE missed a PEI occasion (e.g. due to cell reselection), it monitors every PO until the start of the next PEI occasion. If the UE moves to the cell where PEI is not transmitted for the UE, due to cell reselection, the UE monitors every PO until when the UE moves back to the cell where PEI is transmitted.

# Fig. 9

## RRCRelease message

```
...
RRCRelease ::=                    SEQUENCE {
    rrc-TransactionIdentifier         RRC-TransactionIdentifier,
    criticalExtensions                CHOICE {
        rrcRelease                        RRCRelease-IEs,
        criticalExtensionsFuture          SEQUENCE {}
    }
}


RRCRelease-IEs ::=                SEQUENCE {
...

    suspendConfig                     SuspendConfig                           OPTIONAL,    -- Need R
    deprioritisationReq               SEQUENCE {
...
}
...
}

RRCRelease-v1650-IEs ::=          SEQUENCE {
    mpsPriorityIndication-r16         ENUMERATED {true}                       OPTIONAL, -- Cond Redirection2
    nonCriticalExtension              RRCRelease-v17xy-IEs                    OPTIONAL
}

RRCRelease-v17xy-IEs ::=          SEQUENCE {
    pei-TransmissionArea-r17              CHOICE {
        pei-Cell-r17                          SEQUENCE SIZE (1..maxNrofCells-r17) OF CellIdentity,
        SameAsRNA                             NULL,
        SameAsTA-List                         NULL
    }    OPTIONAL,
    nonCriticalExtension              SEQUENCE {}                             OPTIONAL
}
```

| RRCRelease-IEs field descriptions |
|---|
| . . . |
| **pei-TransmissionArea**<br>Indicates the area where PEI is transmitted. The value of pei-Cell provides a list of cells where PEI is transmitted for the UE. The value of sameAsRNA means that PEI is transmitted within UE's RNA, while the UE is in RRC_INACTIVE. The value of sameAsTA-List means that PEI is transmitted within UE's TA list while the UE is in RRC_IDLE. |

# Fig. 10

8.3.3.2      Successful Operation

**Figure 8.3.3.2-1: UE context release: successful operation**

The AMF initiates the procedure by sending the UE CONTEXT RELEASE COMMAND message to the NG-RAN node.

The UE CONTEXT RELEASE COMMAND message shall contain both the AMF UE NGAP ID IE and the *RAN UE NGAP ID* IE if available, otherwise the message shall contain the *AMF UE NGAP ID* IE.

Upon reception of the UE CONTEXT RELEASE COMMAND message, the NG-RAN node shall release all related signalling and user data transport resources and reply with the UE CONTEXT RELEASE COMPLETE message.

. . .

If the *Paging Assistance Data for CE Capable UE* IE is included in the UE CONTEXT RELEASE COMPLETE message, the AMF shall, if supported, store it and use it for subsequent paging, as specified in TS 23.502 [10].

If the Last Cell Information IE is included in the UE CONTEXT RELEASE COMPLETE message, the AMF shall, if supported, store it and use it for subsequent PEI transmission, as specified in TS 38.304.

---

If the List of Cells Information IE is included in the UE CONTEXT RELEASE COMPLETE message, the AMF shall, if supported, store it and use it for subsequent PEI transmission, as specified in TS 38.304.

# Fig. 11

## 9.2.2.6  UE CONTEXT RELEASE COMPLETE

This message is sent by the NG-RAN node to confirm the release of the UE-associated logical NG-connection over the NG interface.

Direction: NG-RAN node → AMF

| IE/Group Name | Presence | Range | IE type and reference | Semantics description | Criticality | Assigned Criticality |
|---|---|---|---|---|---|---|
| Message Type | M | | 9.3.1.1 | | YES | reject |
| AMF UE NGAP ID | M | | 9.3.3.1 | | YES | ignore |
| RAN UE NGAP ID | M | | 9.3.3.2 | | YES | ignore |
| User Location Information | O | | 9.3.1.16 | | YES | ignore |
| Information on Recommended Cells and RAN Nodes for Paging | O | | 9.3.1.100 | | YES | ignore |
| **PDU Session Resource List** | | *0..1* | | | YES | reject |
| **>PDU Session Resource Item** | | *1..<maxnoofPDUSessions>* | | | - | |
| Criticality Diagnostics | O | | 9.3.1.3 | | YES | ignore |
| Paging Assistance Data for CE Capable UE | O | | 9.3.1.141 | | YES | ignore |
| Last Cell Information | O | | NR CGI 9.3.1.7 | | YES | ignore |

| IE/Group Name | Presence | Range | IE type and reference | Semantics description | Criticality | Assigned Criticality |
|---|---|---|---|---|---|---|
| . . . | | | | | | |
| List of Cells Information | O | | NR CGI 9.3.1.7 | | YES | ignore |

# Fig. 12

8.5.1.2    Successful Operation

| NG-RAN node | | AMF |
|---|---|---|

PAGING

**Figure 8.5.1.2-1: Paging**

The AMF initiates the Paging procedure by sending the PAGING message to the NG-RAN node.

At the reception of the PAGING message, the NG-RAN node shall perform paging of the UE in cells which belong to tracking areas as indicated in the *TAI List for Paging* IE.

If the *Paging DRX* IE is included in the PAGING message, the NG-RAN node shall use it according to TS 38.304 [12] and TS 36.304 [29].

For each cell that belongs to any of the tracking areas indicated in the *TAI List for Paging* IE, the NG-RAN node shall generate one page on the radio interface.

If the *Paging Priority* IE is included in the PAGING message, the NG-RAN node may use it according to TS 23.501 [9].

If the *UE Radio Capability for Paging* IE is included in the PAGING message, the NG-RAN node may use it to apply specific paging schemes.

If the *Assistance Data for Recommended Cells* IE is included in the *Assistance Data for Paging* IE it may be used, together with the *Paging Attempt Information* IE if also present, according to TS 38.300 [8].

. . .

If the *CE-mode-B Restricted* IE is included in the PAGING message and the *Enhanced Coverage Restriction* IE is not set to "restricted", the NG-RAN node shall, if supported, use it as defined in TS 23.501 [9].

If the *NPN Paging Assistance Information* IE is included in the *Assistance Data for Paging* IE, the NG-RAN node may take it into account when determining the cells where paging will be performed.

If the Last Cell Information IE is included in the PAGING message, the NG-RAN node shall transmit PEI only in the cell indicated by the Last Cell Information IE.

If the List of Cells Information IE is included in the PAGING message, the NG-RAN node shall transmit PEI only in the cell indicated by the List of Cells Information IE.

# Fig. 13

## 9.2.4 Paging Messages

### 9.2.4.1 PAGING

This message is sent by the AMF and is used to page a UE in one or several tracking areas.

Direction: AMF → NG-RAN node

| IE/Group Name | Presence | Range | IE type and reference | Semantics description | Criticality | Assigned Criticality |
|---|---|---|---|---|---|---|
| Message Type | M | | 9.3.1.1 | | YES | ignore |
| UE Paging Identity | M | | 9.3.3.18 | | YES | ignore |
| Paging DRX | O | | 9.3.1.90 | | YES | ignore |
| **TAI List for Paging** | | 1 | | | YES | ignore |
| **>TAI List for Paging Item** | | 1..<maxnoof TAIforPaging > | | | - | |
| >>TAI | M | | 9.3.3.11 | | - | |
| Paging Priority | O | | 9.3.1.78 | | YES | ignore |
| UE Radio Capability for Paging | O | | 9.3.1.68 | | YES | ignore |
| Paging Origin | O | | 9.3.3.22 | | YES | ignore |
| Assistance Data for Paging | O | | 9.3.1.69 | | YES | ignore |
| WUS Assistance Information | O | | 9.3.1.143 | | YES | ignore |
| Paging eDRX Information | O | | 9.3.1.154 | | YES | ignore |
| CE-mode-B Restricted | O | | 9.3.1.155 | | YES | ignore |
| Last Cell Information | O | | NR CGI 9.3.1.7 | | YES | ignore |

| IE/Group Name | Presence | Range | IE type and reference | Semantics description | Criticality | Assigned Criticality |
|---|---|---|---|---|---|---|
| . . . . | | | | | | |
| List of Cells Information | O | | | | YES | ignore |

EP 4 462 901 A1

# Fig. 14

## 8.2.5 RAN Paging

### 8.2.5.1 General

The purpose of the RAN Paging procedure is to enable the NG-RAN node₁ to request paging of a UE in the NG-RAN node₂.

The procedure uses non UE-associated signalling.

### 8.2.5.2 Successful operation

**Figure 8.2.5.2-1: RAN Paging: successful operation**

The RAN Paging procedure is triggered by the NG-RAN node₁ by sending the RAN PAGING message to the NG-RAN node₂, in which the necessary information e.g. UE RAN Paging Identity should be provided.

If the *Paging Priority* IE is included in the RAN PAGING message, the NG-RAN node₂ may use it to prioritize paging.

If the *Assistance Data for RAN Paging* IE is included in the RAN PAGING message, the NG-RAN node₂ may use it according to TS 38.300 [9].

. . .

If the Last Cell Information IE is included in the RAN PAGING message, the NG-RAN node₂ shall transmit PEI only in the cell indicated by the Last Cell Information IE.

## 9.1.1.7 RAN PAGING

This message is sent by the NG-RAN node₁ to NG-RAN node₂ to page a UE.

Direction: NG-RAN node₁ → NG-RAN node₂.

| IE/Group Name | Presence | Range | IE type and reference | Semantics description | Criticality | Assigned Criticality |
|---|---|---|---|---|---|---|
| Message Type | M | | 9.2.3.1 | | YES | reject |
| | | | | | | |
| UE RAN Paging Identity | M | | 9.2.3.43 | | YES | ignore |
| Paging DRX | M | | 9.2.3.66 | | YES | ignore |
| RAN Paging Area | M | | 9.2.3.38 | | YES | reject |
| Paging Priority | O | | 9.2.3.44 | | YES | ignore |
| Assistance Data for RAN Paging | O | | 9.2.3.41 | | YES | ignore |
| UE Radio Capability for Paging | O | | 9.2.3.91 | | YES | ignore |
| | | | | | | |
| Last Cell Information | O | | NR CGI 9.2.2.7 | | YES | ignore |

# Fig. 15

## 8.2.5 RAN Paging

### 8.2.5.1 General

The purpose of the RAN Paging procedure is to enable the NG-RAN node₁ to request paging of a UE in the NG-RAN node₂.

The procedure uses non UE-associated signalling.

### 8.2.5.2 Successful operation

**Figure 8.2.5.2-1: RAN Paging: successful operation**

The RAN Paging procedure is triggered by the NG-RAN node₁ by sending the RAN PAGING message to the NG-RAN node₂, in which the necessary information e.g. UE RAN Paging Identity should be provided.

If the *Paging Priority* IE is included in the RAN PAGING message, the NG-RAN node₂ may use it to prioritize paging.

If the *Assistance Data for RAN Paging* IE is included in the RAN PAGING message, the NG-RAN node₂ may use it according to TS 38.300 [9].

· · ·

If the List of Cells Information IE is included in the RAN PAGING message, the NG-RAN node₂ shall transmit PEI only in the cell indicated by the List of Cells Information IE.

### 9.1.1.7 RAN PAGING

This message is sent by the NG-RAN node₁ to NG-RAN node₂ to page a UE.

Direction: NG-RAN node₁ → NG-RAN node₂.

| IE/Group Name | Presence | Range | IE type and reference | Semantics description | Criticality | Assigned Criticality |
|---|---|---|---|---|---|---|
| Message Type | M | | 9.2.3.1 | | YES | reject |
| | | | | | | |
| UE RAN Paging Identity | M | | 9.2.3.43 | | YES | ignore |
| Paging DRX | M | | 9.2.3.66 | | YES | ignore |
| RAN Paging Area | M | | 9.2.3.38 | | YES | reject |
| Paging Priority | O | | 9.2.3.44 | | YES | ignore |
| Assistance Data for RAN Paging | O | | 9.2.3.41 | | YES | ignore |
| UE Radio Capability for Paging | O | | 9.2.3.91 | | YES | ignore |
| | | | | | | |
| List of Cells Information | O | | NR CGI 9.2.2.7 | | YES | ignore |

# Fig. 16

EP 4 462 901 A1

# Fig. 17

# Fig. 18

Fig. 19

EP 4 462 901 A1

## INTERNATIONAL SEARCH REPORT

| | International application No. |
|---|---|
| | **PCT/JP2022/048635** |

**A.    CLASSIFICATION OF SUBJECT MATTER**

*H04W 68/00*(2009.01)i; *H04W 52/02*(2009.01)i; *H04W 72/121*(2023.01)i; *H04W 72/232*(2023.01)i; *H04W 76/30*(2018.01)i
FI:    H04W68/00; H04W52/02 111; H04W72/121; H04W72/232; H04W76/30

According to International Patent Classification (IPC) or to both national classification and IPC

**B.    FIELDS SEARCHED**

Minimum documentation searched (classification system followed by classification symbols)

H04W68/00; H04W52/02; H04W72/121; H04W72/232; H04W76/30

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

**C.    DOCUMENTS CONSIDERED TO BE RELEVANT**

| Category* | Citation of document, with indication, where appropriate, of the relevant passages | Relevant to claim No. |
|---|---|---|
| X | ZTE (email discussion rapporteur). Report of [Post116-e][311][NBIOT/eMTC R17] NB-IoT carrier selection. 3GPP TSG-RAN WG2 Meeting #116bis-e R2-2200030 [online]. 05 January 2022, pp. 1-24, [retrieved on 09 March 2023], <URL: https://www.3gpp.org/ftp/tsg_ran/WG2_RL2/TSGR2_116bis-e/Docs/R2-2200030.zip> <br> 3 Discussion [pp. 1-2], 3.1 Information assigned via dedicated signalling [pp. 2-4] | 1, 5-9 |
| Y | | 2-4 |
| Y | XIAOMI. Paging enhancements for power saving. 3GPP TSG-RAN WG1 Meeting #107-e R1-2111582 [online]. 05 November 2021, pp. 1-4, [retrieved on 13 March 2023], <URL: https://www.3gpp.org/ftp/tsg_ran/WG1_RL1/TSGR1_107-e/Docs/R1-2111582.zip> <br> 2.2 DCI format and content design for PEI [pp. 3-4] | 2-4 |
| A | NEC. Further discussion on enhanced paging carrier selection. 3GPP TSG-RAN WG2 Meeting #116-e R2-2110191 [online]. 22 October 2021, pp. 1-3, [retrieved on 09 March 2023], <URL: https://www.3gpp.org/ftp/tsg_ran/WG2_RL2/TSGR2_116-e/Docs/R2-2110191.zip> <br> 2. Discussion [pp. 1-3] | 1-9 |

☐ Further documents are listed in the continuation of Box C.          ☐ See patent family annex.

| | |
|---|---|
| * Special categories of cited documents: <br> "A" document defining the general state of the art which is not considered to be of particular relevance <br> "E" earlier application or patent but published on or after the international filing date <br> "L" document which may throw doubts on priority claim(s) or which is cited to establish the publication date of another citation or other special reason (as specified) <br> "O" document referring to an oral disclosure, use, exhibition or other means <br> "P" document published prior to the international filing date but later than the priority date claimed | "T" later document published after the international filing date or priority date and not in conflict with the application but cited to understand the principle or theory underlying the invention <br> "X" document of particular relevance; the claimed invention cannot be considered novel or cannot be considered to involve an inventive step when the document is taken alone <br> "Y" document of particular relevance; the claimed invention cannot be considered to involve an inventive step when the document is combined with one or more other such documents, such combination being obvious to a person skilled in the art <br> "&" document member of the same patent family |

| Date of the actual completion of the international search | Date of mailing of the international search report |
|---|---|
| **13 March 2023** | **20 March 2023** |

| Name and mailing address of the ISA/JP | Authorized officer |
|---|---|
| **Japan Patent Office (ISA/JP)** <br> **3-4-3 Kasumigaseki, Chiyoda-ku, Tokyo 100-8915** <br> **Japan** | |
| | Telephone No. |

Form PCT/ISA/210 (second sheet) (January 2015)

**REFERENCES CITED IN THE DESCRIPTION**

**Patent documents cited in the description**

- JP 2022001580 A

**Non-patent literature cited in the description**

- *3GPP TS 38.300 V15.2.0*, June 2018